# EUROPEAN PATENT APPLICATION

(11) **EP 4 726 508 A1**
(43) Date of publication of application: **15.04.2026**
(21) Application number: 25197147.9
(22) Date of filing: 20.08.2025
(51) Int. Cl.: G06F 3/01, H04L 67/131

(54) **SYSTEMS AND METHODS FOR IMMERSIVE COMMAND AND CONTROL FOR MIXED REALITY APPLICATION**

(30) Priority: 09.10.2024 US 202463705245 P; 04.12.2024 US 202463727985 P; 22.04.2025 US 202519186458
(71) Applicant: Palantir Technologies Inc., Denver, CO 80202 (US)
(72) Inventor: IMIG, Robert, Washington (US); MARRA, David, Annandale (US); FENNELL, Stephen, Severna Park (US); MILLER, Westin, Seattle (US); PUHALLA, Gerard, Arlington (US); KONIK, Dominik, Arlington (US); THOMPSON, Joseph, Arlington (US)
(74) Representative: Sayer, Robert David

(57) **Abstract**

In some examples, systems and methods for mixed reality are provided. For example, a method includes: generating a three-dimensional image based on target area data from one or more first data sources; receiving object data associated with one or more digital objects from one or more second data sources; generating an object representation including a representation of at least one of the one or more digital objects based on the object data associated with one or more digital objects; overlaying the object representation on the three-dimensional image to generate a three-dimensional representation; and projecting the three-dimensional representation including the overlaid object representation via a virtual reality device; wherein the method is performed by one or more processors.

## Description

### CROSS REFERENCE TO RELATED APPLICATIONS

This application claims priority to U.S. Provisional Application No. 63/705,245, filed October 9, 2024, and to U.S. Provisional Application No. 63/727,985, filed December 4, 2024, both applications being incorporated by reference herein for all purposes.

### FIELD

Certain embodiments of the present disclosure relate to mixed reality systems, methods, applications, and apparatus. More particularly, some embodiments of the present disclosure relate to immersive command and control for mixed reality systems, methods, applications, and apparatus.

### BACKGROUND

Mixed reality technologies allow a user to view a representation of a digital world. In some examples, the representation is a three-dimensional representation. In certain examples, mixed reality technology allows users to view a representation of a digital world in combination with viewing the physical world.

Hence, it is desirable to improve techniques for mixed reality technologies.

### SUMMARY

Certain embodiments of the present disclosure relate to virtual reality and/or augmented reality (collectively referred to as "mixed reality") systems, methods, applications, and apparatus. More particularly, some embodiments of the present disclosure relate to immersive command and control for mixed reality systems, methods, applications, and apparatus.

At least some aspects of the present disclosure are directed to a method for mixed reality immersive command and control. In some embodiments, the method includes: generating a three-dimensional image based on target area data from one or more first data sources; receiving object data associated with one or more digital objects from one or more second data sources; generating an object representation including a representation of at least one of the one or more digital objects based on the object data associated with one or more digital objects; overlaying the object representation on the three-dimensional image to generate a three-dimensional representation; and projecting the three-dimensional representation including the overlaid object representation via a virtual reality device. In some embodiments, the method is performed using one or more processors.

At least certain aspects of the present disclosure are directed to a method for mixed reality immersive command and control. In some embodiments, the method includes: starting a mixed reality session for collaboration among a plurality of participants, the plurality of participants being associated with a plurality of mixed reality applications; receiving data from a plurality of data sources, the received data including first data associated with a three-dimensional image and second data associated with one or more digital objects; normalizing the data received from the plurality of data sources; transmitting the normalized data to the plurality of mixed reality applications associated with the plurality of participants of the mixed reality session; receiving input data associated with the one or more digital objects from a first mixed reality application of the plurality of mixed reality applications; updating the second data associated with the one or more digital objects based at least in part on the input data; and transmitting the updated second data to at least a second mixed reality application of the plurality of mixed reality applications; causing rendering a three-dimensional representation representative of the three-dimensional image and the updated second data by the second mixed reality application. In some embodiments, the method is performed using one or more processors.

At least some aspects of the present disclosure are directed to a system for mixed reality immersive command and control. In some embodiments, the system includes one or more processors; and one or more memories storing instructions that, when executed by the one or more processors, causes the system to perform a set of operations. In some embodiments, the set of operations include: generating a three-dimensional image based on target area data from one or more first data sources; receiving object data associated with one or more digital objects from one or more second data sources; generating an object representation including a representation of at least one of the one or more digital objects based on the object data associated with one or more digital objects; overlaying the object representation on the three-dimensional image to generate a three-dimensional representation; and projecting the three-dimensional representation including the overlaid object representation via a virtual reality device.

Depending upon embodiment, one or more benefits may be achieved. These benefits and various additional objects, features and advantages of the present disclosure can be fully appreciated with reference to the detailed description and accompanying drawings that follow.

### BRIEF DESCRIPTION OF THE DRAWINGS

FIG. 1 illustrates an example of an immersive command and control (IC2) system according to certain embodiments of the present disclosure.
FIG. 2 illustrates an example of an IC2 environment, also referred to as a mixed reality environment, according to certain embodiments of the present disclosure.
FIG. 3 illustrates an example of an IC2 environment according to certain embodiments of the present disclosure.
FIGS. 4-9 illustrate examples of IC2 environments according to certain embodiments of the present disclosure.
FIG. 10 is an example software architecture of mixed reality services according to certain embodiments of the present disclosure.
FIG. 11 illustrates various example mixed reality devices (e.g., virtual reality devices, augmented reality devices, etc.) that can be used in the mixed reality systems according to certain embodiments of the present disclosure.
FIG. 12 is an illustrative software architecture for a mixed reality system according to certain embodiments of the present disclosure.
FIG. 13 is an illustrative mixed reality client application that is built on the mixed reality service according to certain embodiments of the present disclosure.
FIGS. 14-19 illustrate a plurality of views of an example of an IC2 environment according to certain embodiments of the present disclosure.
FIGS. 20-23 illustrate examples of IC2 environments according to certain embodiments of the present disclosure.
FIG. 24 is an illustrative mixed reality platform for a mixed reality system according to certain embodiments of the present disclosure.
FIG. 25 is an example virtual commend center (e.g., an IC2 environment, a user interface) provided by a mixed reality client (e.g., an IC2 application) according to certain embodiments of the present disclosure.
FIG. 26 is a simplified diagram showing a computing system for implementing a system for mixed reality immersive command and control in accordance with at least one example set forth in the disclosure.
FIG. 27 is a simplified diagram showing a method for mixed reality immerse command and control (e.g., by the mixed reality service) according to certain embodiments of the present disclosure.
FIG. 28 is a simplified diagram showing a method for mixed reality immerse command and control (e.g., by the mixed reality client) according to certain embodiments of the present disclosure.

### DETAILED DESCRIPTION

Unless otherwise indicated, all numbers expressing feature sizes, amounts, and physical properties used in the specification and claims are to be understood as being modified in all instances by the term "about." Accordingly, unless indicated to the contrary, the numerical parameters set forth in the foregoing specification and attached claims are approximations that can vary depending upon the desired properties sought to be obtained by those skilled in the art utilizing the teachings disclosed herein. The use of numerical ranges by endpoints includes all numbers within that range (e.g., 1 to 5 includes 1, 1.5, 2, 2.75, 3, 3.80, 4, and 5) and any number within that range.

Although illustrative methods may be represented by one or more drawings (e.g., flow diagrams, communication flows, etc.), the drawings should not be interpreted as implying any requirement of, or particular order among or between, various steps disclosed herein. However, some embodiments may require certain steps and/or certain orders between certain steps, as may be explicitly described herein and/or as may be understood from the nature of the steps themselves (e.g., the performance of some steps may depend on the outcome of a previous step). Additionally, a "set," "subset," or "group" of items (e.g., inputs, algorithms, data values, etc.) may include one or more items and, similarly, a subset or subgroup of items may include one or more items. A "plurality" means more than one.

As used herein, the term "based on" is not meant to be restrictive, but rather indicates that a determination, identification, prediction, calculation, and/or the like, is performed by using, at least, the term following "based on" as an input. For example, predicting an outcome based on a particular piece of information may additionally, or alternatively, base the same determination on another piece of information. As used herein, the term "receive" or "receiving" means obtaining from a data repository (e.g., database), from another system or service, from another software, or from another software component in a same software. In certain embodiments, the term "access" or "accessing" means retrieving data or information, and/or generating data or information.

Conventional systems and methods for mixed reality (e.g., virtual reality, augmented reality, mixed reality, etc.) are often for a single user and getting inputs from the single user. In some examples, conventional systems and methods are not capable of receiving inputs from multiple users. In some examples, conventional systems and methods typically work for local or remote participants but not a mix of local participants (e.g., within a room) and remote participants.

Various embodiments of the present disclosure can achieve benefits and/or improvements by a computing system managing a mixed reality session with one or more local participants and/or one or more remote participants. In some embodiments, benefits include significant improvements, including, for example, increased efficiency, reduced complexity, and improved accuracy, in managing inputs from session participants (e.g., local and/or remote participants) and generating a digital representation including the inputs anchoring on a physical object. In certain embodiments, benefits include increased object data accuracy when taking inputs regarding objects from a plurality of participants for a mixed reality session. In some embodiments, systems and methods are configured to determine whether a plurality of participants are local with each other (e.g., within a threshold distance, within a room, etc.) and manage the verbal collaborations between the local participants and remote participants. In certain embodiments, systems and methods are configured to update a plurality of three-dimensional representations at a plurality of locations incorporating data and inputs from multiple data sources and participants.

According to some embodiments, systems and methods for mixed reality immersive command and control (IC2) are designed to solve the problem of the disaggregated command for various applications. In certain embodiments, the disaggregated command includes commands from one or more local participants and/or one or more remote participants, all collaborating and making command decisions in a shared environment. In some embodiments, a local participant is within a threshold distance (e.g., 5 meters, 10 meters, etc.) of an area of interest (e.g., a repair location, a wildfire location, etc.) or with each other. In certain embodiments, a remote participant is outside a threshold distance (e.g., 5 meters, 10 meters, etc.) of an area of interest (e.g., a repair location, a wildfire location, etc.) or a participant. In some embodiments, the systems and methods provide one or more solutions enabling the mixed reality of a geography location and/or an area of interest (e.g., a room, a machine, etc.). In some embodiments, the solution, provided by the IC2 system, increases the mission (e.g., repair mission, disaster recovery mission, field engineering mission, etc.) command function by increasing situational awareness, command and control, and/or access to real-time terrain data.

In certain embodiments, the systems and methods give a participant, also referred to as a user, a view of the area of interest (e.g., a field, a geography area, a geospatial area, a machine, etc.), and an experience as if the participant is in the command center (e.g., with data and information from various data sources), but while the participant is actually on the move or in an unsophisticated environment. In addition to visualization, in some embodiments, there is also a need for live collaboration with other users in different parts of the world, which may also be required on the move. In certain embodiments, mixed reality is a combination of physical world and digital world, including physical and/or digital objects and environments. In some embodiments, mixed reality allows a user to immerse in the mixed-reality environment by interacting with a virtual environment using hands and/or interacting with physical objects.

According to certain embodiments, the systems and methods for IC2 utilize virtual reality (VR) capabilities to project (e.g., present) a virtual command center in front of the user that uses (e.g., backed by) the underlying software platform so that users can seamlessly interact with the environment and/or objects (e.g., content) as well as other users whether physically located with them or not. In some embodiments, the systems and methods use (e.g., backed by) data platform and data integrations, three-dimensional (3D) geospatial visualizations, collaborative applications and real-time synchronization between users, geo-temporal data model and interactions, target data model (e.g., target workbench data model) and interactions, video players (e.g., full-motion video (FMV) video players, etc.), dashboard views, and/or the like.

According to some embodiments, an IC2 system is a 3D mixed reality application (e.g., a virtual reality application, a rich 3D virtual reality application, a 3D augmented reality application, etc.) that utilizes pass-through augmented reality (AR) to project a holographic 3D image (e.g., a holographic 3D map, etc.) in front of the users participating in the virtual session, for example, via one or more mixed reality device (e.g., a virtual reality (VR) device, an AR device, a VR headset, an AR headset, etc.). In certain embodiments, an IC2 system includes a 3D mixed reality application that allows the users to view the projected content via one or more see-through mixed reality devices. In certain embodiments, it extends software platform capabilities into the immersive environment. In some embodiments, using the IC2 system, one or more users are able to visualize 3D in actual 3D, right in front of them, by interacting with the 3D environment projected through the display. In certain embodiments, one or more users are also able to utilize (e.g., immediately utilize, etc.) the data integrations of one or more software platforms by seeing data from a variety of different data sources on the same visualization (e.g., a map), and ability to interact with those elements in the visualization to get more detail. In some embodiments, the IC2 system can be in a small form factor as it utilizes off-the-shelf virtual reality (VR) device (e.g., VR hardware) to run the application. In certain embodiments, the IC2 system requires little setup or infrastructure needs.

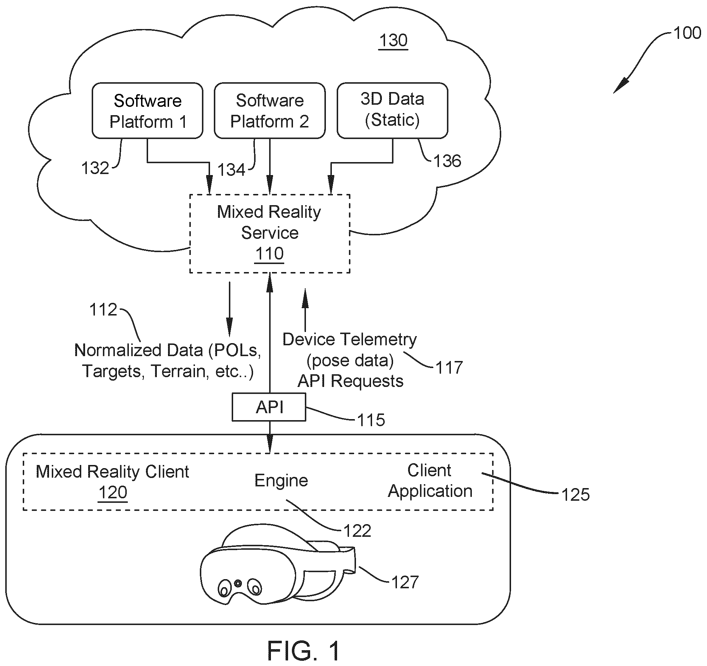

FIG. 1 illustrates an example of an immersive command and control (IC2) system 100 according to certain embodiments of the present disclosure. FIG. 1 is merely an example. One of ordinary skill in the art would recognize many variations, alternatives, and modifications. In some embodiments, the IC2 system 100, also referred to as the mixed reality system, includes one or more mixed reality services 110 and one or more mixed reality clients 120 (e.g., the mixed reality application, etc.). In certain embodiments, the mixed reality service 110 receives mixed reality data 130 from one or more data sources. In some embodiments, the mixed reality data 130 includes data from a plurality of software platforms 132 and 134 and/or three-dimensional data 136 (e.g., static data, geospatial data, etc.). In certain embodiments, the mixed reality data 130 includes and/or receives data from geospatial data, geospatial artifact layer, annotations, geo-temporal layers, observations, video streams, data streams (e.g., real-time data, sensor data, data from one or more sensors on an airplane or a drone, etc.), target data (e.g., data associated with a target of interest), target voice, and/or the like. In some embodiments, the mixed reality data 130 includes environment data from one or more first data sources (e.g., geospatial maps), object data from one or more second data sources (e.g., data collected by a sensor disposed on a plane), telemetry data collected by a plurality of mixed reality applications running on a plurality of virtual reality devices, and/or the like.

According to some embodiments, the mixed reality service 110 includes one or more session managers for one or more users (e.g., one or more players, one or more participants, etc.). In certain embodiments, the mixed reality service 110 includes a plurality of session managers for a plurality of areas of interest that overlap. In some embodiments, the mixed reality service 110 is configured to collect inputs from one or more mixed reality clients 120 (e.g., one or more mixed reality applications, one or more client applications 125, etc.) and update the mixed reality data 130 to be transmitted to the one or more mixed reality clients 120. In certain embodiments, one or more participants of a mixed reality session use one or more virtual reality devices 127. In some embodiments, the mixed reality client 120 uses a computing engine 122 (e.g., a game engine, etc.).

According to certain embodiments, the mixed reality service 110 normalizes data (e.g., POI (point of interest), data associated with targets of interest, terrain data, etc.) for one or more mixed reality clients. For example, the mixed reality service 110 generates one or more data objects, also referred to as digital objects, based on the mixed reality data 130. In some embodiments, the mixed reality service 110 can do off-device rendering. In certain embodiments, the mixed reality service 110 can run on an edge device and/or for offline use. In some embodiments, the mixed reality service 110 (e.g., running on a server) normalizes data via one or more geospatial metrics (e.g., registering on a point in the space). In certain embodiments, the mixed reality service 110 normalizes data via a standard time.

According to some embodiments, the mixed reality service 110 and one or more mixed reality clients 120 communicate via one or more software interfaces 115 (e.g., application programming interfaces (APIs), software services, etc.). In certain embodiments, the mixed reality service 110 is configured to transmit 117 normalized data to the one or more mixed reality clients 120. In some embodiments, the mixed reality service 110 is configured to transmit normalized data to the one or more mixed reality clients 120 via one or more software interfaces 115. In certain embodiments, the normalized data include, for example, normalized area of interest data, normalized target geospatial data, normalized terrain data, and/or the like.

In some embodiments, the mixed reality client 120 is configured to collect and/or transmit telemetry data (e.g., location data, pose data, etc.) 117 regarding a respecting virtual reality device 127. In certain embodiments, the mixed reality client 120 transmits 112 device telemetry to the mixed reality service 110. In some embodiments, the mixed reality client 120 transmits 112 device telemetry to the mixed reality service 110 via a respective software interface 115. In certain embodiments, the mixed reality client 120 transmits device telemetry (e.g., pose data) to the mixed reality service 110 in response to requests received via API (application programming interface).

According to certain embodiments, the mixed reality client 120 is configured to render a three-dimensional representation (e.g., data into 3D environment), for example, via a software library (e.g., a software platform SDK (software development kit), etc.). In some embodiments, the three-dimensional representation includes a static three-dimensional image (e.g., a three-dimensional map) with representations of one or more digital objects overlaid. In some embodiments, the mixed reality client 120 provides client-side rendering, for example, allowing a user to immerse into the mixed environment. In certain embodiments, the mixed reality client 120 sends back telemetry data of a device (e.g., a user device, a computing device, a virtual reality device, etc.). In some embodiments, the mixed reality client 120 is platform dependent and includes one or more client applications that is platform specific (e.g., AndroidTM, AppleTM, WindowTM, etc.). In certain embodiments, telemetry data includes pose data, movement data, and/or the like. In some embodiments, pose data include geospatial data (e.g., longitude, latitude, attitude, etc.) and/or orientation data (e.g., facing, directions, etc.).

According to some embodiments, the IC2 system 100 and/or the mixed reality service 110 starts a mixed reality session for collaboration among a plurality of participants, where the plurality of participants are associated with a plurality of mixed reality applications. In certain embodiments, each participant is using a virtual reality device with a mixed reality application running on the virtual reality device.

According to certain embodiments, the IC2 system 100 and/or the mixed reality service 110 receives data from a plurality of data sources, where the received data includes first data associated with a three-dimensional image (e.g., a geospatial map, a stadium data, etc.) and second data associated with one or more digital objects (e.g., a field engineering target object, a disaster recovery area, etc.). In some embodiments, the IC2 system 100 and/or the mixed reality service 110 normalizes the data received from the plurality of data sources. In certain embodiments, the IC2 system 100 and/or the mixed reality service 110 normalizes the received data via geospatial data (e.g., a center of a target of interest, a center of an area of interest, etc.), for example, via image registration algorithm. In some embodiments, the IC2 system 100 and/or the mixed reality service 110 normalizes the received data via time data (e.g., synchronizing data from a plurality of data sources.

According to some embodiments, the IC2 system 100 and/or the mixed reality service 110 transmits the normalized data to other mixed reality application of the plurality of mixed reality applications associated with the plurality of participants of the mixed reality session. In certain embodiments, the IC2 system 100 and/or the mixed reality service 110 causes rendering (e.g., via one or more VR devices, etc.) a three-dimensional representation including the 3D image and/or one or more representations associated with the one or more digital objects. In some embodiments, the one or more representations associated with the one or more digital objects are presented within the 3D image.

According to certain embodiments, the IC2 system 100 and/or the mixed reality service 110 receives input data associated with the one or more digital objects from at least one of the plurality of mixed reality applications (e.g., the mixed reality client 120, etc.). In some embodiments, the input data is received via a panel associated with a digital object and/or a task. In certain embodiments, the panel (e.g., an object panel, a task panel) is rendered with the three-dimensional representation.

According to some embodiments, the IC2 system 100 and/or the mixed reality service 110 updates the second data associated with the one or more digital objects based at least in part on the input data and/or real-time object data (e.g., object data being updated in real-time). In certain embodiments, the IC2 system 100 and/or the mixed reality service 110 transmits the updated second data to at least one of the plurality of mixed reality applications. In some embodiments, the IC2 system 100 and/or the mixed reality service 110 transmits the updated second data to every mixed reality application of the plurality of mixed reality applications. In certain embodiments, at process 2750, the IC2 system 100 and/or the mixed reality service 110 causes rendering an updated three-dimension representation including the three-dimension image and the updated second data.

According to certain embodiments, at least a part of the mixed reality data (e.g., the mixed reality data 130) is updated real-time (e.g., video stream) and causes updates the 3D representations generated by one or more VR devices. In some embodiments, at least a part of the mixed reality data includes VR device location that can be changing overtime (e.g., participant moving) and cause updates to the 3D representations generated by one or more VR devices. In certain embodiments, at least a part of the mixed reality data is updated based on the changes. In some embodiments, a change can be a request to change one or more visual properties (e.g., shape, size, color, filling, etc.) that is received via a mixed reality client. In certain embodiments, the IC2 system 100 and/or the mixed reality service 110 changes a representation to at least one of the one or more digital objects based on the request to change.

According to some embodiments, the IC2 system 100 and/or the mixed reality service 110 receives a first object input from the first mixed reality application of the plurality of mixed reality applications, where the first object input is captured by the first mixed reality application and the first object input associated with at least one of one or more properties of the one or more digital objects. In certain embodiments, the IC2 system 100 and/or the mixed reality service 110 receives a second object input from a second mixed reality application of the plurality of mixed reality applications, where the second object input is captured by the second mixed reality application, and/or where the second object input is associated with at least one of the one or more properties of the one or more digital objects.

In some embodiments, the IC2 system 100 and/or the mixed reality service 110 merges the first object input and the second object input to generate a merged object input (e.g., a specific update to object data). For example, the first object input includes a move to a digital object and second object input includes a change of color to the digital input, and the IC2 system 100 and/or the mixed reality service 110 can merge both changes. In certain embodiments, the IC2 system 100 and/or the mixed reality service 110 causing rendering a representation of the merged object input (e.g., a representation of a digital object at a new location and/or with a new color, etc.) by at least the first virtual reality device or the second virtual reality device.

According to some embodiments, the IC2 system 100 and/or the mixed reality service 110 determines whether the plurality of VR devices corresponding to the plurality of participants are local for each other. In certain embodiments, the IC2 system 100 and/or the mixed reality service 110 determines whether the plurality of VR devices meet on or more local criteria. In some embodiments, the one or more local criteria include a criterion of a threshold distance (e.g., 5 meters), such that participants within the threshold distance are determined to be local. In certain embodiments, the one or more local criteria include a criterion of a geographic boundary (e.g., a room, a field, etc.), such that participants within the geographic boundary are determined to be local. In some embodiments, the mixed reality client applications and/or the mixed reality service generate a same virtual command center for the local participants.

In certain embodiments, the IC2 system 100 and/or the mixed reality service 110 receives first telemetry data from the first mixed reality application of the plurality of mixed reality applications, the first telemetry data including first geospatial data associated with the first virtual reality device of the plurality of virtual reality devices. In some embodiments, the IC2 system 100 and/or the mixed reality service 110 receives second telemetry data from the second mixed reality application of the plurality of mixed reality applications, the second telemetry data including second geospatial data associated with the second virtual reality device of the plurality of virtual reality devices. In certain embodiments, the IC2 system 100 and/or the mixed reality service 110 determines whether the first virtual reality device and the second virtual reality device meet one or more local criteria based at least in part on the first telemetry data and the second telemetry data.

According to certain embodiments, in response that the first virtual reality device and the second virtual reality device meet the one or more local criteria, the IC2 system 100 and/or the mixed reality service 110 is configured to prevent audio data captured by the second mixed reality application corresponding to the second virtual reality device from being transmitted to the first mixed reality application corresponding to the first virtual reality device. In some embodiments, the IC2 system 100 and/or the mixed reality service 110 is configured to do not play the audio signal captured by the second mixed reality application on the first virtual reality device (e.g., not by the first mixed reality application).

According to some embodiments, in response that the first virtual reality device and the second virtual reality device do not meet the one or more local criteria, the IC2 system 100 and/or the mixed reality service 110 transmits second session input (e.g., input by interacting an object panel and/or a task panel, voice input, etc.) captured by the second mixed reality application to the first mixed reality application. In certain embodiments, in response that the first virtual reality device and the second virtual reality device do not meet the one or more local criteria, the IC2 system 100 and/or the mixed reality service 110 transmits first session input (e.g., input by interacting an object panel and/or a task panel, voice input, etc.) captured by the first mixed reality application to the second mixed reality application.

According to certain embodiments, in response that the first virtual reality device and the second virtual reality device do not meet the one or more local criteria, the IC2 system 100 and/or the mixed reality service 110 generates a digital figure representing the second participant in the virtual command center generated for the first participant. In certain embodiments, the IC2 system 100 and/or the mixed reality service 110 receives a request from a third participant to join the mixed reality session, where the third participant is associated with a third mixed reality application running on a third virtual reality device. In certain embodiments, the IC2 system 100 and/or the mixed reality service 110 transmits the normalized data and the updated second data to the third mixed reality application.

According to some embodiments, the IC2 system 100 and/or the mixed reality client 120 receives target area (e.g., area of interest (AOI), point of interest (POI), etc.) data from one or more first data sources. In certain embodiments, the target area data includes geospatial data for an area of interest (AOI). In some embodiments, the environment data includes environment data associated with the AOI including, for example, weather data, geography data, time data, and/or the like. In certain embodiments, the target area data includes target data (e.g., data associated with a target area, data associated with a target object, data associated with a building, etc.), effector data (e.g., data for equipment, data for fire distinguishing equipment, etc.), and/or target-effector associated pairing data. For example, the IC2 system 100 and/or the mixed reality client 120 is to assist a deployment of a field engineering at the target area. As an example, the first data source is a geospatial data repository. In some embodiments, the target area data is normalized, for example, based on geospatial information (e.g., a point in the target area, a center point in the target area, etc.), time information, and/or the like. In some embodiments, the target area data includes data on non-operational zones within the target area, e.g. zones where operations are not permitted. Such zones may be located based on the location of non-operational or protected objects, e.g. objects near which operations are not permitted within a certain distance.

According to certain embodiments, the IC2 system 100 and/or the mixed reality client 120 receives object data associated with one or more digital objects representing one or more objects (e.g., a building, a vehicle, a plane, etc.) associated with the target area (e.g., in the target area, moving in or out of the target area, etc.). In some embodiments, the IC2 system 100 and/or the mixed reality client 120 uses a digital object (e.g., an object in software) to represent a physical object. In certain embodiments, the IC2 system 100 and/or the mixed reality client 120 uses a digital object (e.g., an object in software) to represent a physical object, for example, using ontology for a specific industry, an ontology for a specific organization, and/or an ontology for a specific use case. In some embodiments, the object data is normalized, for example, based on geospatial information (e.g., a point in the target area, a center point in the target area, etc.), time information, and/or the like.

According to some embodiments, the IC2 system 100 and/or the mixed reality client 120 generates a three-dimensional image (e.g., a three-dimensional geospatial map, a three-dimensional machine image, etc.) based on the target area data from one or more first data sources. In certain embodiments, the IC2 system 100 and/or the mixed reality client 120 generates an object representation including a representation of the one or more digital objects based on the object data associated with one or more digital objects. In some embodiments, the IC2 system 100 and/or the mixed reality client 120 overlays the object representation on the three-dimensional image to generate a three-dimensional representation. In certain embodiments, the IC2 system 100 and/or the mixed reality client 120 projects the three-dimensional representation including the overlaid object representation via a virtual reality device. In some embodiments, the three-dimensional representation is projected anchoring on a physical object.

According to certain embodiments, the IC2 system 100 and/or the mixed reality client 120 presents an object panel associated with a digital object and/or a task panel within the three-dimensional representation. In some embodiments, the IC2 system 100 and/or the mixed reality client 120 presents an object panel associated with a digital object and/or a task panel within the three-dimensional representation in response to a user input (e.g., by selecting from a menu, etc.). In some embodiments, the object panel presents one or more properties, instructions, presentation properties, and/or the like. In certain embodiments, the task panel presents one or more options for a task including corresponding task parameters (e.g., task steps, etc.) and performance parameters (e.g., time for completion, efficacy parameters, etc.). In some embodiments, the object panel and/or the task panel are presented in the foreground in the three-dimensional representation, for example, not blocked by object representation. In certain embodiments, the object panel and/or the task panel are presented in the foreground in the three-dimensional representation, for example, blocking a part of the object representation and/or the three-dimensional image.

According to some embodiments, the IC2 system 100 and/or the mixed reality client 120 receives local input via the object panel or the task panel. In certain embodiments, the IC2 system 100 and/or the mixed reality client 120 receives a local input associated with the one or more digital objects from a local participant. In some embodiments, the IC2 system 100 and/or the mixed reality client 120 transmits the local input data to the mixed reality service. In certain embodiments, the mixed reality service receives additional input data from one or more data feeds, input data from one or more sensor data feeds, input data from a different virtual command center generated by a remote participant, and/or other input data. In some embodiments, the mixed reality service generates merged input data based at least in part on the local input data and/or the additional input data.

According to certain embodiments, the IC2 system 100 and/or the mixed reality client 120 receives merged input data generated based at least in part on additional input data, for example, input data from a remote participant. In some embodiments, the IC2 system 100 and/or the mixed reality client 120 generates and/or presents an updated three-dimensional representation based at least in part on the local input data and/or the merged input data. In certain embodiments, the IC2 system 100 and/or the mixed reality client 120 projects the second three-dimensional representation via the virtual reality device. In some embodiments, the IC2 system 100 and/or the mixed reality client 120 repeat the processes to receive inputs and/or updates and/or update the three-dimensional representation, for example, rendered by the virtual reality device.

According to certain embodiments, the IC2 system 100 and/or the mixed reality client 120 presents one or more session panels associated with a mixed reality session, where the session panel includes at least one selected from a group consisting of an object panel including text information or graphic information associated with the one or more properties of the at least one of the one or more digital objects, a task panel including text information associated with a task, and an image panel associated with one or more image properties (e.g., map properties, zooming properties, etc.) associated with the three-dimensional image (e.g., a 3D map). In some embodiments, the IC2 system 100 and/or the mixed reality client 120 collects local input data based on a participant interacting with the virtual command center and/or the session panel via the virtual reality device.

According to some embodiments, a session panel includes text information or graphic information associated with one or more digital objects, the three-dimensional image, and/or one or more tasks. In certain embodiments, the session panel is presented as foreground of the three-dimensional representation. In some embodiments, the IC2 system 100 and/or the mixed reality client 120 receives session input based on a participant's interaction (e.g., text input, selection, finger movement, etc.) with one or more session panels.

According to certain embodiments, the IC2 system 100 and/or the mixed reality client 120 manages a mixed reality session includes a first participant and/or a group of first participants who are local. In some embodiments, the IC2 system 100 and/or the mixed reality client 120 receives telemetry data from a second virtual reality device associated with a second participant, where the first participant and the second participant collaborate in the mixed reality session. In certain embodiments, the first participant and the second participant are collaborating via voice. In certain embodiments, the IC2 system 100 and/or the mixed reality client 120 determines whether the first virtual reality device and the second virtual reality device meet one or more local criteria based at least in part on the telemetry data. In some embodiments, the one or more local criteria include at least one selected from a group consisting of a criterion on a distance, a criterion on a geographic boundary, and a criterion on signal propagation.

According to some embodiments, in response that the first virtual reality device and the second virtual reality device meet the one or more local criteria, the IC2 system 100 and/or the mixed reality client 120 prevents audio data captured by the second virtual reality device from being transmitted to and/or played at the first virtual reality device. In certain embodiments, in response that the first virtual reality device and the second virtual reality device do not meet the one or more local criteria, the IC2 system 100 and/or the mixed reality client 120 generates a digital figure representing the second participant. In some embodiments, the three-dimensional representation includes the digital figure representing the second participant.

According to certain embodiments, the system renders a jumbotron having a plurality of sides, at least one of the plurality of sides presenting at least a part of the environment data from at least one of the one or more first data sources. In some embodiments, at least one of the plurality of sides of the jumbotron presents at least a part of the object data from at least one of the one or more second data sources. In certain embodiments, the at least a part of the object data includes a video feed associated with sensor data from a sensor disposed on a plane (e.g., a drone, an UAS, an airplane, etc.). In some embodiments, the jumbotron is fully configurable and each side and content can be customized for the specific use-case and task (e.g., use-case and task at hand).

In some embodiments, the IC2 system includes the one or more repositories (not shown) that can include mixed reality data 130, device telemetry data, client applications, input data, and/or the like. The repository may be implemented using any one of the configurations described below. A data repository may include random access memories, flat files, XML files, and/or one or more database management systems (DBMS) executing on one or more database servers or a data center. A database management system may be a relational (RDBMS), hierarchical (HDBMS), multidimensional (MDBMS), object oriented (ODBMS or OODBMS) or object relational (ORDBMS) database management system, and the like. The data repository may be, for example, a single relational database. In some cases, the data repository may include a plurality of databases that can exchange and aggregate data by data integration process or software application. In an exemplary embodiment, at least part of the data repository may be hosted in a cloud data center. In some cases, a data repository may be hosted on a single computer, a server, a storage device, a cloud server, or the like. In some other cases, a data repository may be hosted on a series of networked computers, servers, or devices. In some cases, a data repository may be hosted on tiers of data storage devices including local, regional, and central.

In some cases, various components in the IC2 system 100 can execute software or firmware stored in non-transitory computer-readable medium to implement various processing steps. Various components and processors of the IC2 system 100 can be implemented by one or more computing devices including, but not limited to, circuits, a computer, a cloud-based processing unit, a processor, a processing unit, a microprocessor, a mobile computing device, and/or a tablet computer. In some cases, various components referenced by the IC2 system 100 (e.g., the mixed reality service 110, the one or more mixed reality clients 120, etc.) can be implemented on a shared computing device. Alternatively, a component of the IC2 system 100 can be implemented on multiple computing devices. In some implementations, various modules and components referenced by the IC2 system 100 can be implemented as software, hardware, firmware, or a combination thereof. In some cases, various components referenced by the IC2 system 100 can be implemented in software or firmware executed by a computing device.

Various components referenced by IC2 system 100 can communicate via or be coupled to via a communication interface, for example, a wired or wireless interface. In some embodiments, the systems and methods are network agnostic and can sit on top of various underlying communication protocols. The communication interface includes, but is not limited to, any wired or wireless short-range and long-range communication interfaces. The short-range communication interfaces may be, for example, local area network (LAN), interfaces conforming known communications standard, such as Bluetooth^{®} standard, IEEE 802 standards (e.g., IEEE 802.11), a ZigBee^{®} or similar specification, such as those based on the IEEE 802.15.4 standard, or other public or proprietary wireless protocol. The long-range communication interfaces may be, for example, wide area network (WAN), cellular network interfaces, satellite communication interfaces, etc. The communication interface may be either within a private computer network, such as an intranet, or on a public computer network, such as the Internet.

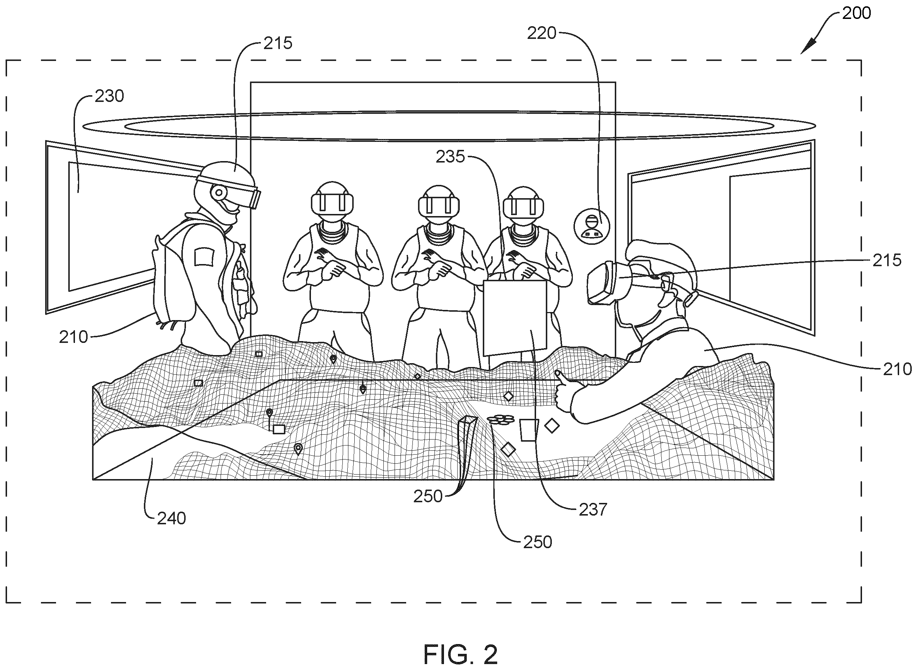

According to certain embodiments, the IC2 system allows real-time collaboration with other IC2 systems' users in addition to the system users. In some embodiments, the IC2 system initiates a session for a given target of interest (e.g., area of interest (AOI)). In certain examples, an AOI is linked one-to-one (e.g., 1:1) with a geospatial map, enabling seamless collaboration between map users and IC2 system users for a certain AOI. In some examples, multiple IC2 system users can also collaborate with each other in the same session. If the users are physically located with each other, in certain embodiments, they will see each other in real life as the IC2 system utilizes the pass-through augmented reality (AR) capabilities of these devices. For remote users (e.g., virtual users), in a different physical location, in some embodiments, the IC2 system projects the remote users (e.g., virtual users) as digital figures (e.g., virtual avatars) that are represented around the map table. FIG. 2 illustrates an example of an IC2 environment 200, also referred to as a mixed reality environment, according to certain embodiments of the present disclosure. FIG. 2 is merely an example. One of ordinary skill in the art would recognize many variations, alternatives, and modifications.

In the example illustrated in FIG. 2, in the IC2 environment 200, an IC2 system includes the use of ontology and virtual projections. For example, the IC2 environment 200 includes one or more local participants 210 and one or more remote participants 220. In some examples, the one or more remote participants 220 are represented by one or more digital figures with graphics (e.g., avatar objects, virtual avatars, etc.). In certain examples, the IC2 system projects geospatial collaborative map 240 onto a physical object (e.g., a surface, a table, etc.) in the IC2 environment. In some examples, the IC2 system presents representations of one or more digital objects 250 (e.g., a vehicle, an airplane, etc.) in the IC2 environment 200. In certain examples, the local participants 210 interact with the geospatial collaborative map 240, the one or more digital objects 250, one or more virtual projections 230 and 235, and/or the like in the IC2 environment 200. In certain examples, the remote participants 220 interact with the geospatial collaborative map 240, the one or more digital objects 250, one or more virtual projections 230 and 235, and/or the like in the IC2 environment 200. In some embodiments, the IC2 system can generate task information and/or object information 237 (e.g., insights of actions) presented on the virtual projection 235 based on one or more data sources. In certain embodiments, in response to determining one or more participants 210 being local participants, the IC2 system prevents the voice from the one or more local participants from propagating to the VR device (e.g., VR hardware) used by the other local participants.

In certain embodiments, an ontology refers to a structural framework (e.g., data model) containing information and data related to objects and relationships of objects (e.g., functions applicable to objects, links) within a specific domain (e.g., an organization, an industry). In some embodiments, an action refers to one or more processing logics applied to one or more objects including, for example, creating objects, changing objects, combining objects, linking objects, deleting objects, and/or the like. In certain embodiments, an action type is a data structure of an action, which creates or modifies one or more objects of one or more object types when the action occurs. In certain embodiments, an action can be represented by an instance of the action type, where the instance of the action type includes data associated with the action occurring and using the action type data structure. In some embodiments, an object type is a data structure representing a type of an object, where the data structure includes one or more object properties.

According to some embodiments, in addition to the 3D image (e.g., a static 3D image, a map, etc.), there are other elements the users can interact with in the IC2 environment. In certain embodiments, the IC2 system presents a jumbotron above the physical projection surface. In some examples, the jumbotron is a key element of the virtual environment. In certain embodiments, the jumbotron has multiple sides (e.g., 4 sides), and can be customized for the needs of the user. In some examples, the IC2 system presents FMV (Full Motion Video) from a drone or other airplane in the physical environment, dashboards, and/or other visuals that represent commander-level information needed for decision-making, on a side of jumbotron.

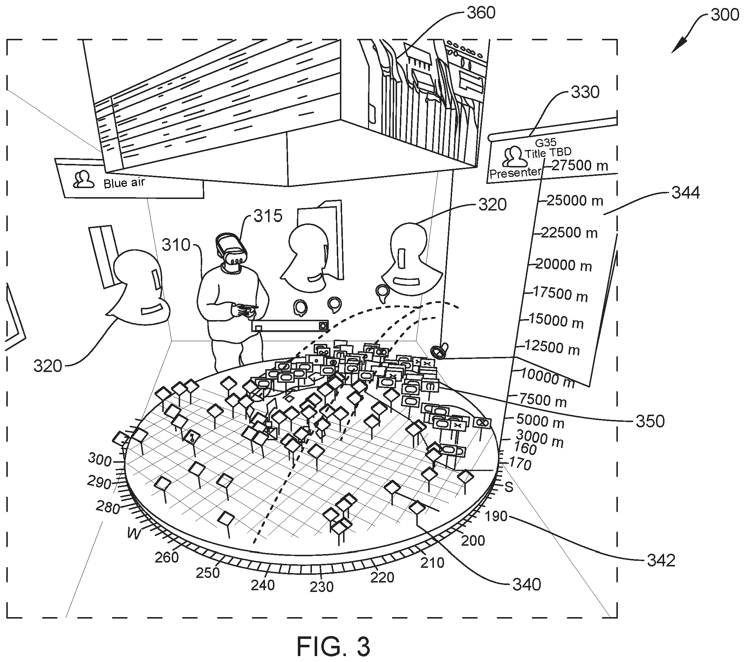

FIG. 3 illustrates an example of an IC2 environment 300, also referred to as a mixed reality environment, according to certain embodiments of the present disclosure. FIG. 3 is merely an example. One of ordinary skill in the art would recognize many variations, alternatives, and modifications. In this example, the IC2 environment 300 includes one or more local participants 310, representations of one or more remote participants 320 (e.g., one or more virtual participants), a jumbotron 360, a projection surface, representations of a plurality of digital objects 350, a geospatial map 340, and/or one or more panels 330. In this example, the geospatial map 340 is associated with one or more geospatial metrics 342 (e.g., orientation metrics, longitude, latitude, etc.) and 344 (e.g., altitude metrics, etc.). In some embodiments, the representations of the plurality of digital objects 350 are overlaid on the geospatial map 340. In certain embodiments, the one or more geospatial metrics 342 and 344 are adjacent to the geospatial map 340. In some embodiments, the jumbotron 360 includes presentation of data from a plurality of data sources (e.g., weather data, video feeds, etc.). For example, one side of the jumbotron 360 shows a video stream captured via one or more image sensors disposed on a plane. In some embodiments, a plane can be, for example, an airplane, an unmanned aerial system (UAS), and/or the like.

According to certain embodiments, one or more participants to a mixed reality session can be determined to be local participants based on one or more local criteria. In some embodiments, the one or more local criteria include a criterion of a threshold distance (e.g., 5 meters), such that participants within the threshold distance are determined to be local. In certain embodiments, the one or more local criteria include a criterion of a geographic boundary (e.g., a room, a field, etc.), such that participants within the geographic boundary are determined to be local. In some embodiments, the mixed reality client applications and/or the mixed reality service generate a same virtual command center for the local participants. In certain embodiments, the mixed reality client application in the IC2 system generates digital figures to represent remote participants 320.

According to certain embodiments, an IC2 environment includes one or more additional elements. For example, the IC2 environment includes a virtual workbench panel (e.g., a virtual target workbench panel) that is backed by object data (e.g., geospatial data) and/or software (e.g., software modules). As an example, the IC2 environment includes a configuration panel. For example, the IC2 environment includes one or more personal UI (user interface) workbench panels (e.g., menus) for the users enabling them to do such things like cycle through proposed COAs (Course of Action) for the object pairings. In some embodiments, these panels positions in the environment are fully customized allowing a user to setup a customized workspace in their mixed reality environment.

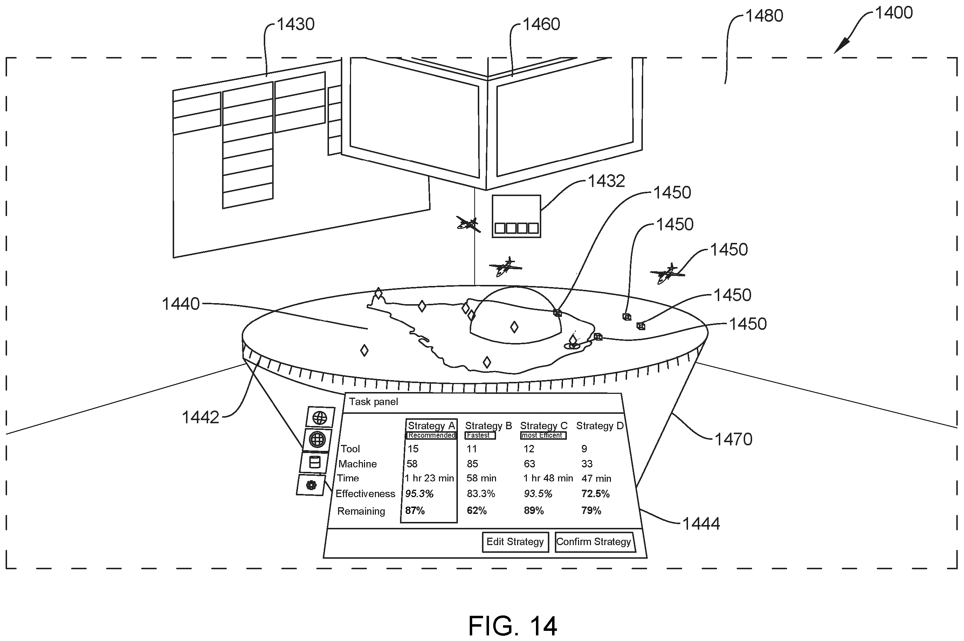

FIG. 14 illustrates an example of an IC2 environment 1400, also referred to as a mixed reality environment. FIG. 14 is merely an example. One of ordinary skill in the art would recognize many variations, alternatives, and modifications. In this example, the IC2 environment 1400 includes a virtual projection 1430 (e.g., a two-dimensional representation) and 1432, a three-dimensional image 1440 (e.g., a geospatial map), one or more workbench panels 1444, one or more digital objects 1450, and a jumbotron 1460, which are collectively referred to as a virtual command center. In some embodiments, the three-dimensional image 1440 is anchor on a physical object 1470 at a physical location 1480 (e.g., a room).

In certain embodiments, the IC2 environment 1400 includes one or more object panels 1432. In some examples, the object panel 1432 includes representation of one or more corresponding objects and/or actions. In some examples, the object panel 1432 allows a user to view and/or edit one or more object properties (e.g., location property, the type of object, representation properties, etc.). In certain examples, the representation properties include, for example, color, shape, two-dimensional (2D) image position, three-dimensional (3D) image position, and/or the like.

According to some embodiments, the IC2 environment 1400 includes one or more virtual workbench panels 1444, also referred to as the task panel, for creating, editing, and coordinating tasks (e.g., repair tasks, disaster recovery, field engineering tasks, etc.). In certain examples, the virtual workbench panel 1444 is accessible and/or editable via one or more local participants and/or one or more remote participants at the same time. In some embodiments, a participant in a mixed reality session can have a session role. In certain embodiments, a session role includes a presenter role or editor role that allows creating and editing digital objects and tasks. In some embodiments, a session role includes a view role that allows viewing but does not allow create or edit digital objects and tasks. In some embodiments, the object panel 1432 and/or the task panel 1444 are referred to as session panels.

In some embodiments, inputs and/or edits to the virtual workbench panel 1444, and/or object panel 1432, also referred to as session inputs, are transmitted from a first mixed reality application (e.g., the mixed reality client 120) to a mixed reality service (e.g., the mixed reality service 110), and incorporated into mixed reality data (e.g., mixed reality data 130). In certain embodiments, the updated mixed reality data is transmitted from the mixed reality service to a second mixed reality application, which updates the representation in a command center in a different IC2 environment for a remote participant. In some embodiments, the remote participants are in a plurality of locations that are remote to each other (e.g., do not meet the local criteria). For example, one remote participant is at location 1 that is also remote to location 2 that have three remote participants.

In some embodiments, the object panel 1432 presents one or more properties, instructions, presentation properties, and/or the like. In certain embodiments, the task panel 1444 presents one or more options for a task including corresponding task parameters (e.g., task steps, etc.) and performance parameters (e.g., time for completion, efficacy parameters, etc.). In some embodiments, the object panel and/or the task panel are presented in the foreground in the three-dimensional representation, for example, not blocked by object representation. In certain embodiments, the object panel and/or the task panel are presented in the foreground in the three-dimensional representation, for example, blocking a part of the object representation and/or the three-dimensional image.

According to some embodiments, the systems and methods for mixed reality immersive command and control are designed with data immersion, extensibility, and portability as principles. In certain embodiments, an IC2 system delivers rich, immersive integration with the entire data enterprise, for example, including data from a plurality of data sources (e.g., sensor data, data collected by sensors on a drone, organization data repository, geospatial data repository, and/or the like). In some embodiments, IC2 enhances command and staff duties in the joint operations center and can be deployed in expeditionary environments at the point of need. In certain embodiments, the solution, provided by the IC2 system, increases the task (e.g., repair task or mission, disaster recovery task or mission, field engineering task or mission, etc.) command function by increasing situational awareness, command and control, and/or access to real-time terrain data.

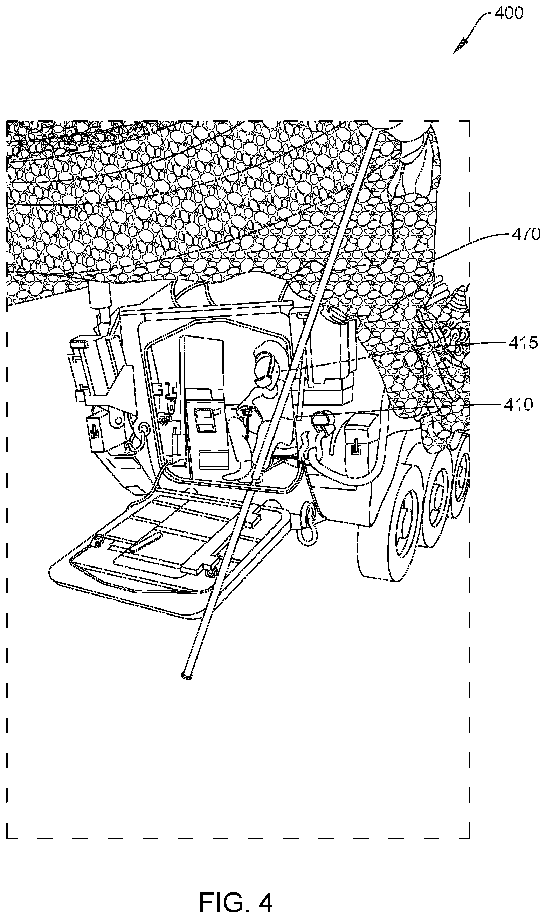

FIG. 4 illustrates an example of an IC2 environment 400 according to certain embodiments of the present disclosure. FIG. 4 is merely an example. One of ordinary skill in the art would recognize many variations, alternatives, and modifications. In the IC2 environment 400, a user 410 is using a virtual reality device 415, for example, to gather information of repairing a tractor 470. In some examples, the virtual reality device 415 allows the user 410 to see the device rendering and the real physical environment (e.g., pass-through).

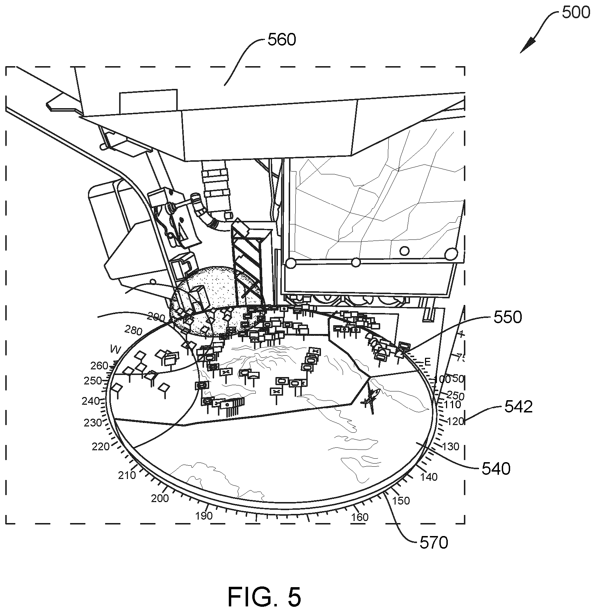

FIG. 5 illustrates an example of an IC2 environment 500 according to certain embodiments of the present disclosure. FIG. 5 is merely an example. One of ordinary skill in the art would recognize many variations, alternatives, and modifications. In this example, the IC2 environment 500 illustrates a virtual command center including a three-dimensional image 540 projecting on a physical object 570, a representation of an image metric 542 associated with the three-dimensional image, a representation of one or more digital objects 550, and/or a jumbotron 560.

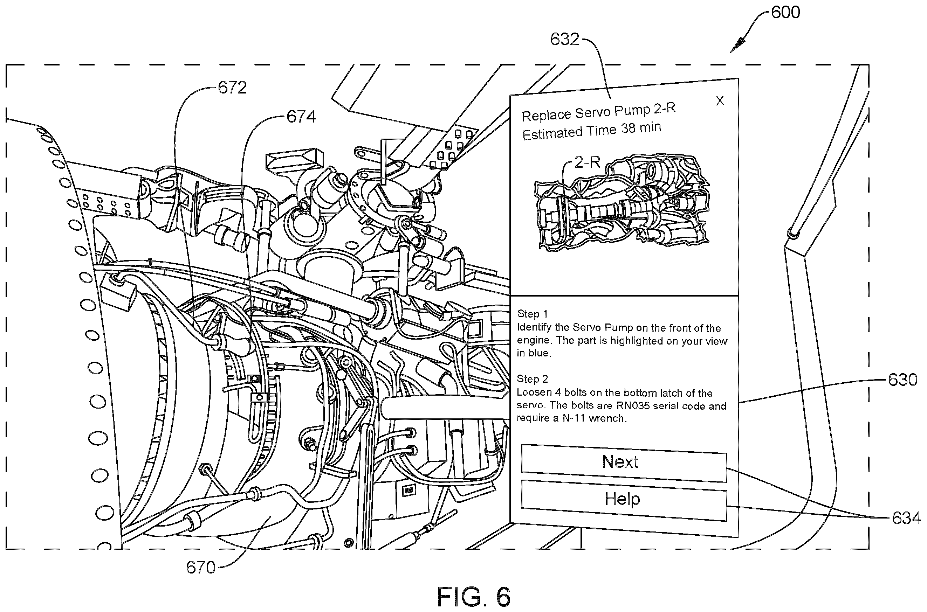

FIG. 6 illustrates an example of an IC2 environment 600 according to certain embodiments of the present disclosure. FIG. 6 is merely an example. One of ordinary skill in the art would recognize many variations, alternatives, and modifications. In this example, the IC2 environment 600 includes a repair environment for repairing a machine. As illustrated, for example, the IC2 environment 600 presents a panel 630 including instruction 632 on how to replace a part in the machine 670. In some examples, the instruction 632 includes reference to one or more components 672 and 674. In certain embodiments, the IC2 system presents content associated with one or more digital objects on a panel (e.g., a virtual panel) that are interactive (e.g., taking inputs, including command buttons, etc.). In some embodiments, the panel 630 includes one or more interactive components 634 (e.g., buttons, text boxes, etc.).

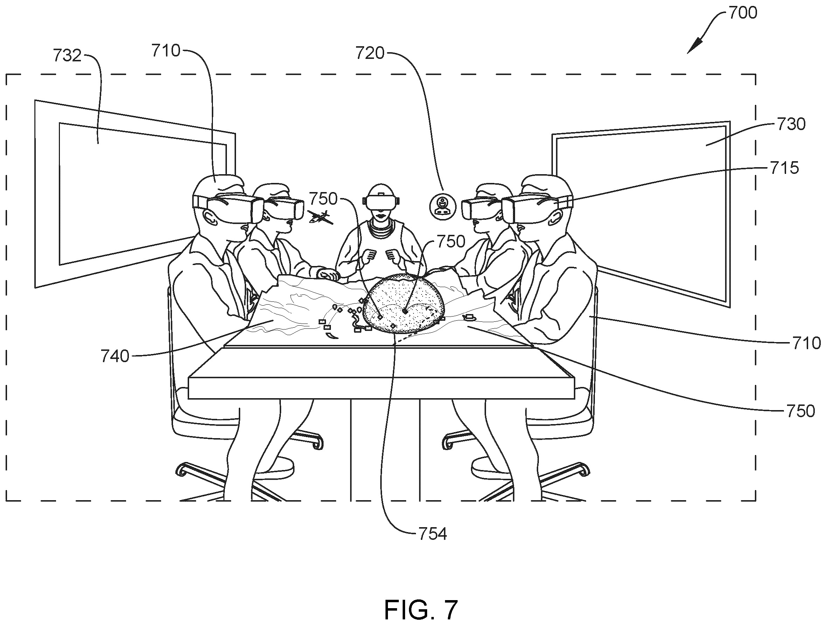

FIG. 7 illustrates an example of an IC2 environment 700 for a mixed reality session according to certain embodiments of the present disclosure. FIG. 7 is merely an example. One of ordinary skill in the art would recognize many variations, alternatives, and modifications. In this example, one or more local participants 710 are sitting by a table, which the three-dimensional representation, including the three-dimensional map 740 and a plurality of digital objects 750, is rendered anchoring on the table. In some examples, the local participants 710 are using the virtual reality devices 715 to see the three-dimensional representation and the virtual projections 730. In certain examples, the IC2 environment 700 includes a three-dimensional shape 754 representing one or more properties (e.g., possible locations, possible impact regions, etc.) associated with a digital object 750.

According to certain embodiments, one or more participants to the mixed reality session can be determined to be local participants based on one or more local criteria. In some embodiments, the one or more local criteria include a criterion of a threshold distance (e.g., 5 meters), such that participants within the threshold distance are determined to be local. In certain embodiments, the one or more local criteria include a criterion of a geographic boundary (e.g., a room, a field, etc.), such that participants within the geographic boundary are determined to be local. In some embodiments, the mixed reality client applications and/or the mixed reality service generate a same virtual command center, including the three-dimensional representation (e.g., the 3D image 740 and digital objects 750, the virtual projections 730, for the local participants.

In certain embodiments, the mixed reality session includes one or more remote participants 720 (e.g., a field engineer in the field, etc.), who can see a same or similar three-dimensional representation. In some embodiments, the one or more remote participants 720 are represented as digital figures in the virtual command center. In certain embodiments, the one or more local participants 710 and the one or more remote participants 720 can collaborate verbally. In some embodiments, the IC2 system can prevent audio signals from a local participant to transmit to a mixed reality client corresponding to another local participant. In certain embodiments, a mixed reality client running on a first VR device corresponding to a first local participant can determine that the received audio signal is from a second VR device corresponding to a second local participant and do not play the received audio signal via the first VR device.

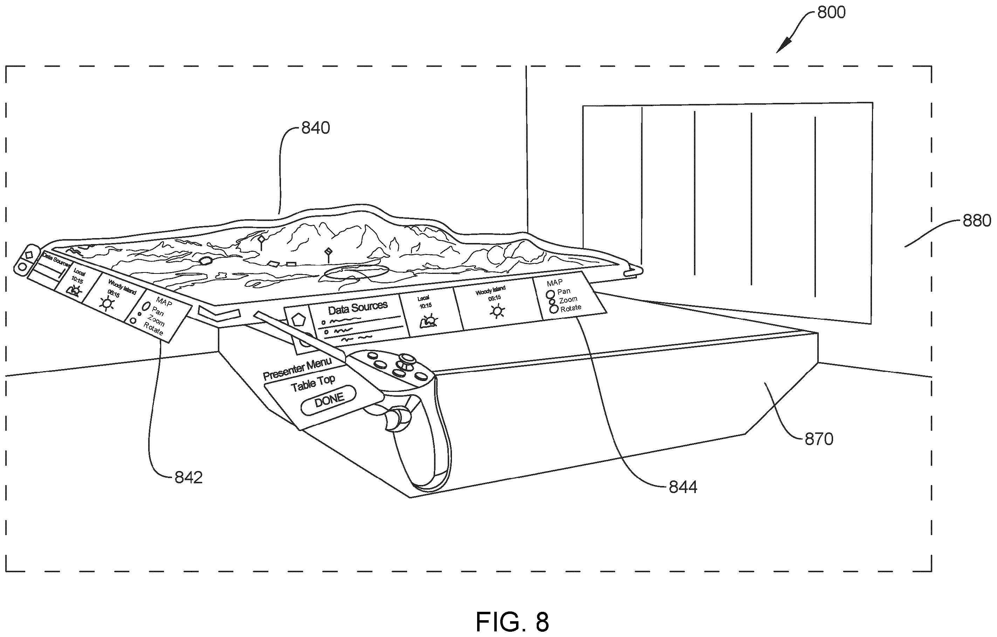

FIG. 8 illustrates an example of an IC2 environment 800 rendered at a physical location 880 according to certain embodiments of the present disclosure. FIG. 8 is merely an example. One of ordinary skill in the art would recognize many variations, alternatives, and modifications. In this example, a three-dimensional (3D) image 840 (e.g., a geospatial map) is project on a physical object 870. In some examples, the 3D image 840 is associated with a plurality of panels 842 and 844. For example, the panel 842 includes the data source information, local time, target location time, map properties, and/or the like.

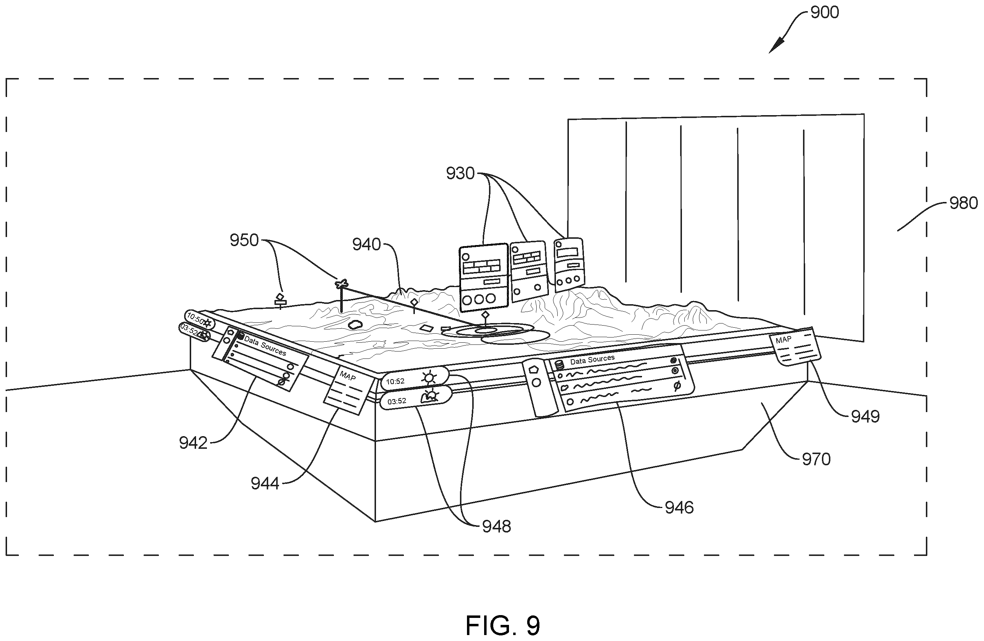

FIG. 9 illustrates an example of an IC2 environment 900 rendered at a physical location 980 according to certain embodiments of the present disclosure. FIG. 9 is merely an example. One of ordinary skill in the art would recognize many variations, alternatives, and modifications. For example, the IC2 environment 900 is a second state subsequent to a first state illustrated in FIG. 8, for example, after getting additional inputs and/or data. In this example, a three-dimensional (3D) image 940 (e.g., a geospatial map) is project on a physical object 970. In some examples, the 3D image 940 is associated with a plurality of image panels 942, 944, 946, 948, and 949. For example, the panels 942 and 946 include data source information. As an example, the panels 944 and 949 includes map properties. As an example, the panels 948 include time and weather information. In this example, one or more representations of one or more digital objects 950 are overlaid on the 3D image 940. In some examples, one or more object panels, image panels, and/or task panels (e.g., panels 930, panels 942, 944, etc.), also referred to as session panels, are rendered. In certain examples, the panels are rendered in the foreground of the three-dimensional representation including the 3D image 940 and representations of the one or more digital objects 950.

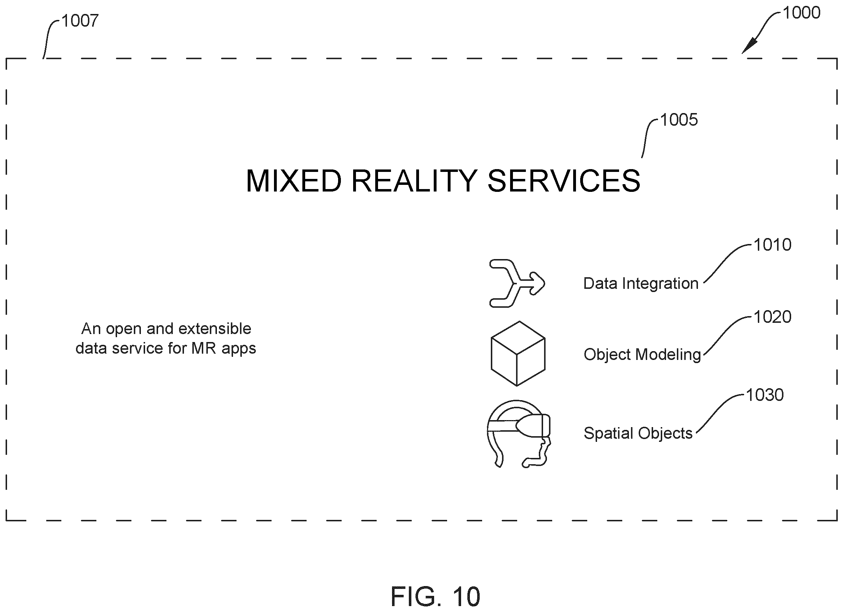

FIG. 10 is an example software architecture 1000 of mixed reality services 1005 according to certain embodiments of the present disclosure. FIG. 10 is merely an example. One of ordinary skill in the art would recognize many variations, alternatives, and modifications. In this example, the mixed reality service 1005 includes a data integration component 1010 (e.g., a data integration software module, etc.), an object modeling component 1020 (e.g., an ontology for a specific industry, an ontology for a specific organization, an ontology for a specific application, etc.), a plurality of spatial objects component 1030 and/or the like.

In certain examples, the mixed reality service 1005 is an open, extensible data service built to enable mixed reality applications with human-driven data and AI-assisted, actionable insights. In some examples, the mixed reality service is powered by one or more software platforms (e.g., the service mesh, the Ontology Software Development Kit (OSDK) etc.). In certain examples, developers on all platforms can add decision-making to client applications with only a few lines of code (e.g., 4 lines of code).

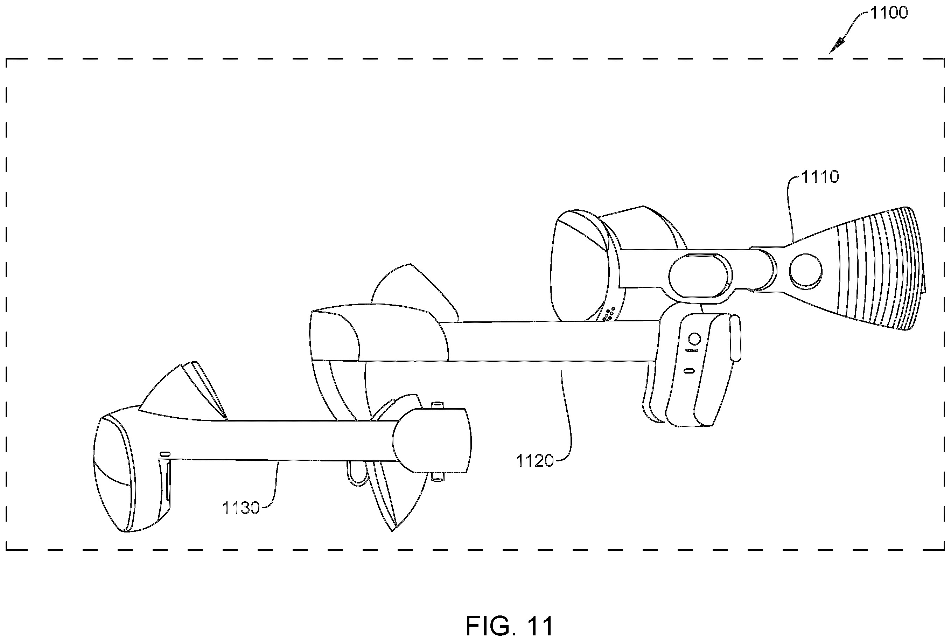

In some examples, the ontology-powered, mixed reality application, immersive command & control (IC2) application, delivers rich integration with the entire data enterprise. In some examples, IC2 enhances command and staff duties in the joint operations center and can be deployed in expeditionary environments at the point of need. In certain examples, the solution amplifies the mission command function by increasing situational awareness, command and control, and access to high-fidelity terrain data. In some examples, the mixed reality service and the mixed reality application are open, extensible, and deployable on various devices and platforms. FIG. 11 illustrates various example mixed reality devices 1100 (e.g., VR device or AR device 1110, VR device or AR device 1120, VR device or AR device 1130, etc.) that can be used in the mixed reality systems according to certain embodiments of the present disclosure. FIG. 11 is merely an example. One of ordinary skill in the art would recognize many variations, alternatives, and modifications.

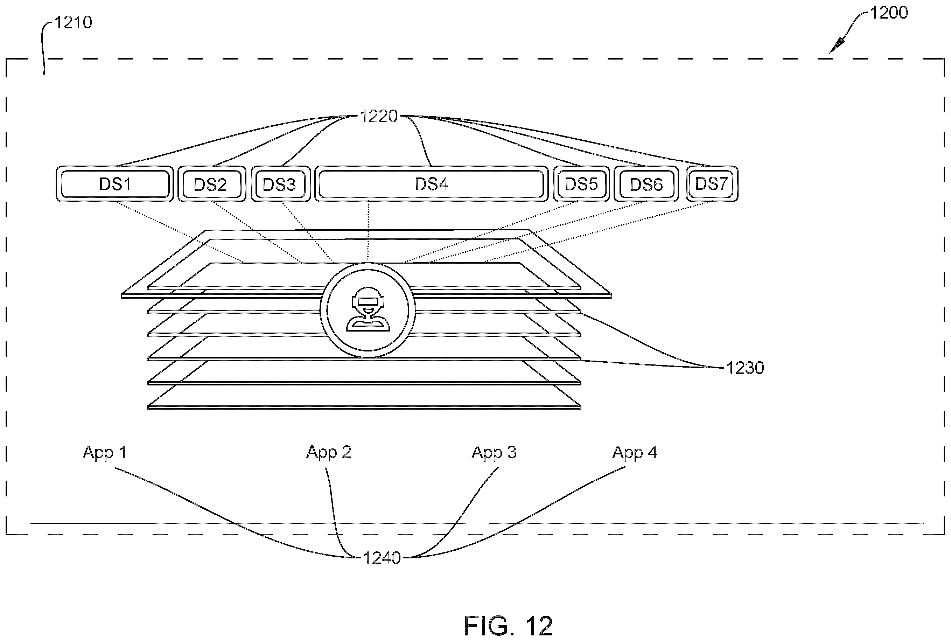

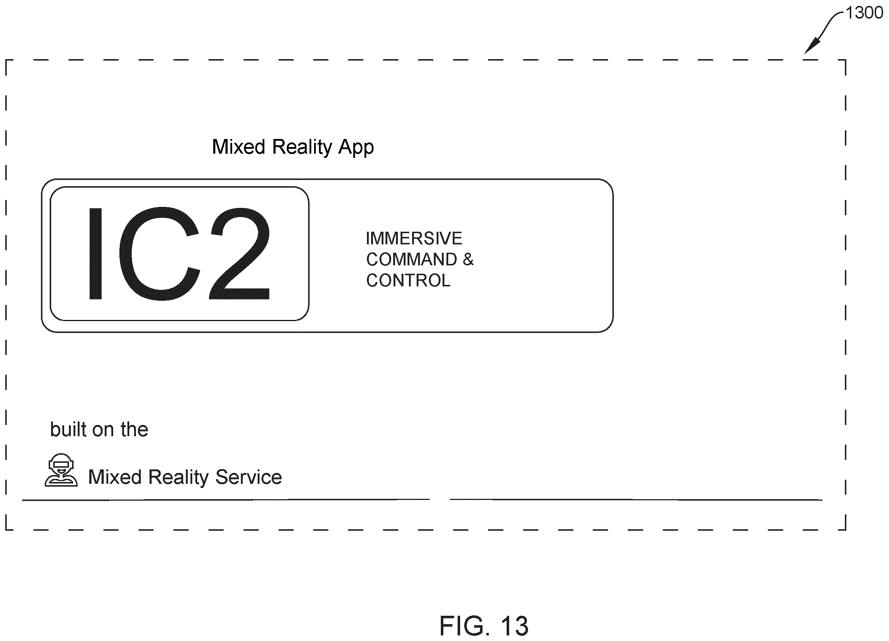

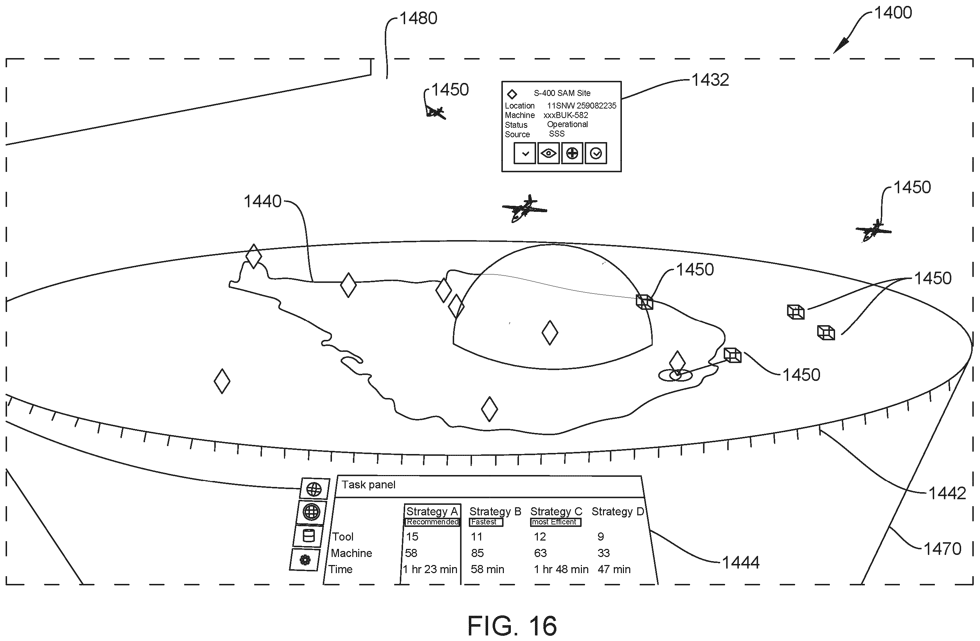

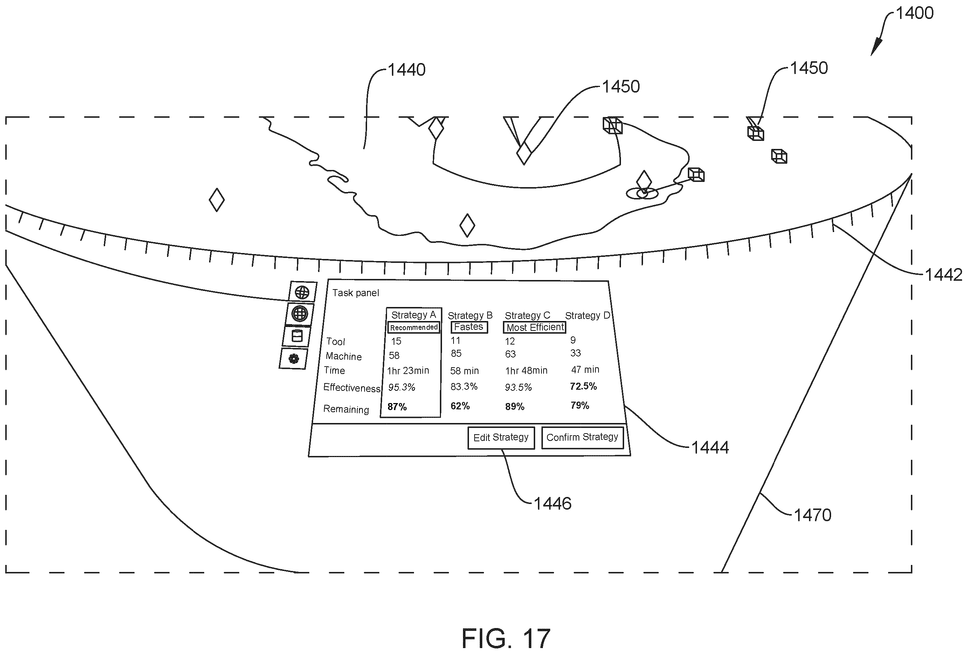

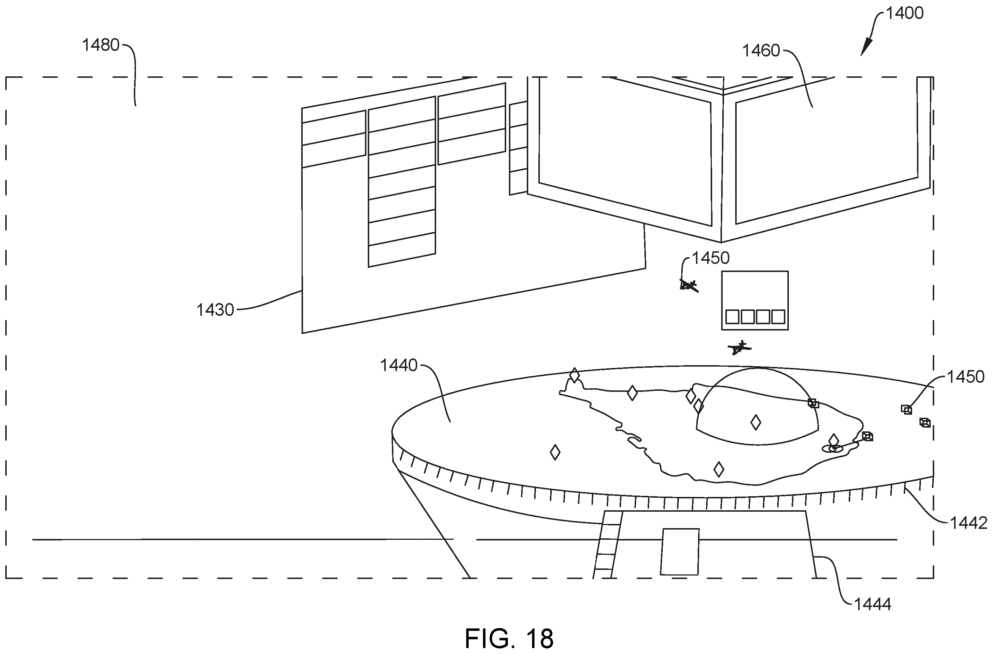

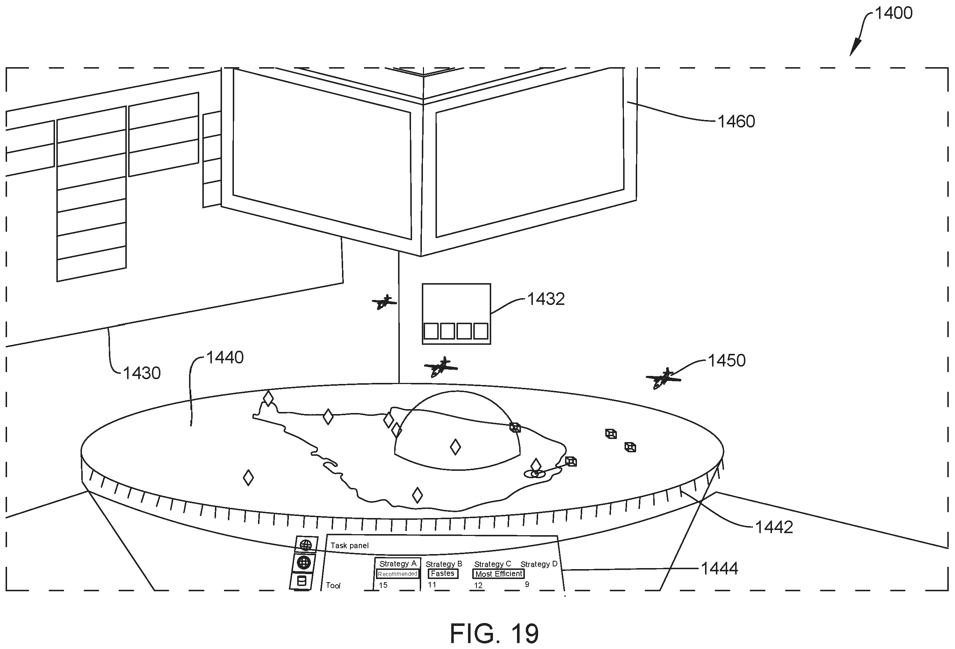

FIG. 12 is an illustrative software architecture 1200 for a mixed reality system 1210 (e.g., the IC2 system 100) according to certain embodiments of the present disclosure. FIG. 12 is merely an example. One of ordinary skill in the art would recognize many variations, alternatives, and modifications. In this example, the mixed reality system 1210 includes a plurality of data sources 1220, one or more mixed reality services 1230 including a plurality of software layers, and a plurality of mixed reality clients 1240. In some embodiments, a mixed reality client 1240 is a software application. In certain embodiments, each VR device used in the mixed reality system 1210 has a mixed reality client 1240 running on it. FIG. 13 is an illustrative mixed reality client application 1300 that is built on the mixed reality service according to certain embodiments of the present disclosure. FIG. 13 is merely an example. One of ordinary skill in the art would recognize many variations, alternatives, and modifications. In some examples, the mixed reality client application provides immersive command and control (IC2), for example, generating a virtual command center with examples illustrated in FIGS. 14-19.

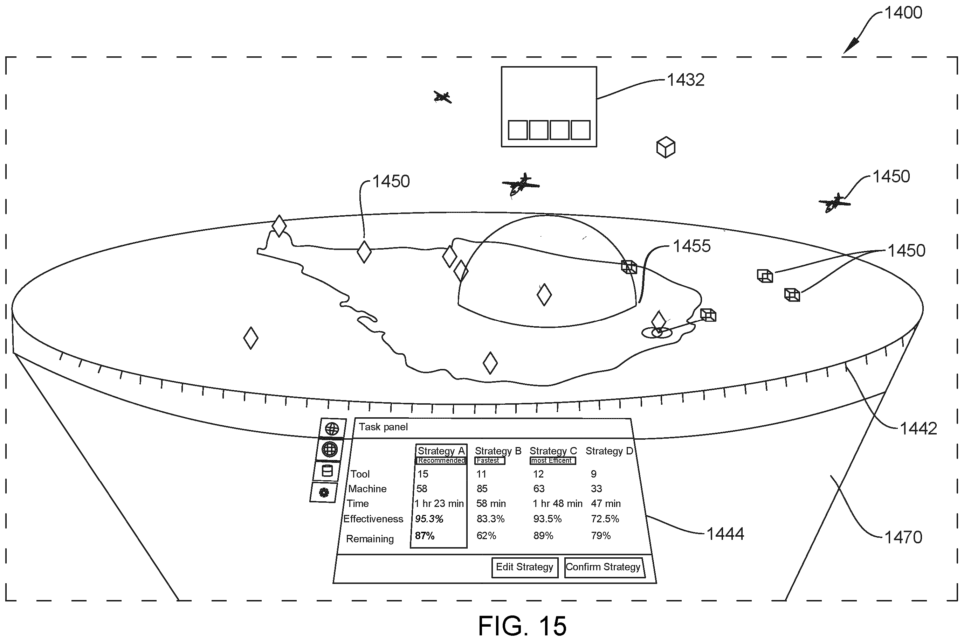

FIGS. 14-19 illustrate a plurality of views of an example of an IC2 environment 1400 according to certain embodiments of the present disclosure. FIGS. 14-19 are merely examples. One of ordinary skill in the art would recognize many variations, alternatives, and modifications. In some example, the IC2 environment 1400 includes a virtual projection 1430 (e.g., a two-dimensional representation) and 1432, a three-dimensional image 1440 (e.g., a geospatial map), one or more workbench panels 1444, one or more digital objects 1450, and a jumbotron 1460, which are collectively referred to as a virtual command center. In some embodiments, the three-dimensional image (3D) 1440 is anchored on a physical object 1470 at a physical location 1480 (e.g., a room). In certain embodiments, the 3D image 1440 is associated with an image metric 1442 (e.g., map metric). In some examples, the image metric 1442 encompasses the three-dimensional image 1440. In some embodiments, as illustrated in FIG. 15, the IC2 environment 1400 includes representation of object relationship (e.g., location relationship) and object properties (e.g., impact area, etc.) 1455 for one or more digital objects 1450.

In certain embodiments, the IC2 environment 1400 includes one or more object panels 1432. In some examples, the object panel 1432 includes representation of one or more corresponding objects and/or actions. In some examples, the object panel 1432 allows a user to view and/or edit one or more object properties (e.g., location property, the type of object, representation properties, etc.). In certain examples, the representation properties include, for example, color (e.g., red, blue, green, yellow, etc.), shape (e.g., diamond shape, rectangle, triangle, polygon, etc.), two-dimensional (2D) image position, three-dimensional (3D) image position, and/or the like. In some embodiments, a three-dimensional representation includes the 3D image 1440, the image metric 1442, and representations of the one or more digital objects 1450. In certain embodiments, the object panel 1432 is in the foreground (e.g., not blocked by) of the three-dimensional representation. In some embodiments, the mixed reality client allows a participant to move the 3D image location of the object panel 1432 (e.g., move up, move to the left, etc.).

According to some embodiments, the IC2 environment 1400 includes one or more virtual workbench panels 1444 for creating, editing, and coordinating tasks (e.g., repair tasks, disaster recovery, field engineering tasks, etc.). In certain examples, the virtual workbench panel 1444 is accessible and/or editable via one or more local participants and/or one or more remote participants at the same time. In some embodiments, a participant in a mixed reality session can have a session role. In certain embodiments, a session role includes a presenter role or editor role that allows creating and editing digital objects and tasks. In some embodiments, a session role includes a view role that allows viewing but does not allow create or edit digital objects and tasks.

In some embodiments, inputs and/or edits to the virtual workbench panel 1444 and/or object panel 1432 are transmitted from a first mixed reality application (e.g., the mixed reality client 120) to a mixed reality service (e.g., the mixed reality service 110), and incorporated into mixed reality data (e.g., mixed reality data 130). In certain embodiments, the updated mixed reality data is transmitted from the mixed reality service to a second mixed reality application, which updates the representation in a command center in a different IC2 environment for a remote participant. In some embodiments, the remote participants are in a plurality of locations that are remote to each other (e.g., do not meet the local criteria). For example, one remote participant is at location 1 that is also remote to location 2 that have three remote participants.

According to some embodiments, the systems and methods for mixed reality immersive command and control are designed with data immersion, extensibility, and portability as principles. In certain embodiments, an IC2 system delivers rich, immersive integration with the entire data enterprise, for example, including data from a plurality of data sources (e.g., sensor data, data collected by sensors on a drone, organization data repository, geospatial data repository, and/or the like). In some embodiments, IC2 enhances command and staff duties in the joint operations center and can be deployed in expeditionary environments at the point of need. In certain embodiments, the solution, provided by the IC2 system, increases the task (e.g., repair task or mission, disaster recovery task or mission, field engineering task or mission, etc.) command function by increasing situational awareness, command and control, and/or access to real-time terrain data.

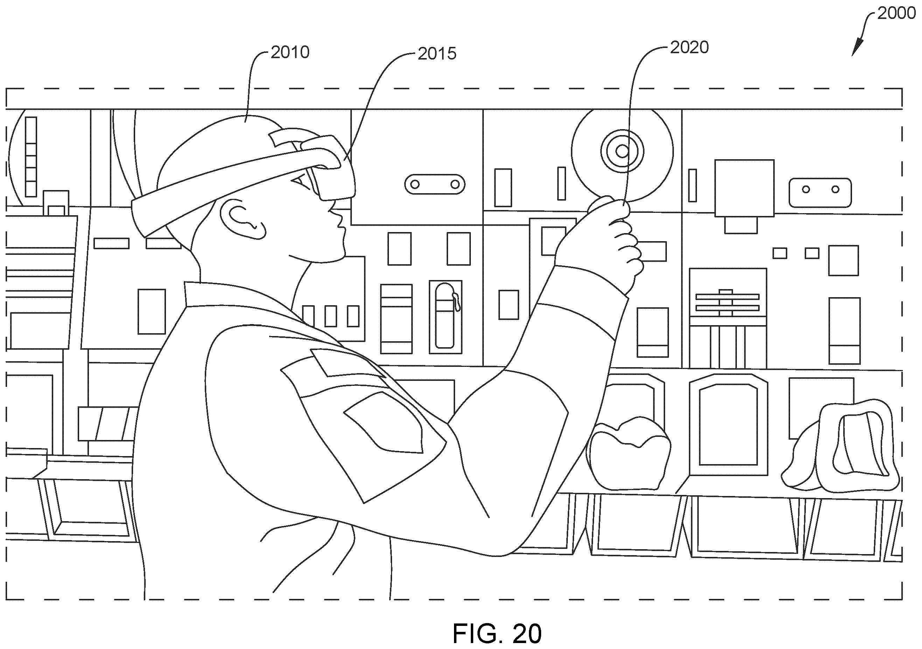

In certain examples, an IC2 system includes the mixed reality service and one or more mixed reality client applications, also referred to as the immersive command and control (IC2) applications. In some examples, the IC2 system allows planning in real time across the field (e.g., geospatial area) - in the rear, at the front, and on the way in the same virtual environment (e.g., operation center). Some embodiments of IC2 systems and environments are described in FIGS. 20-23 according to certain embodiments of the present disclosure. These figures are merely examples. One of ordinary skill in the art would recognize many variations, alternatives, and modifications.

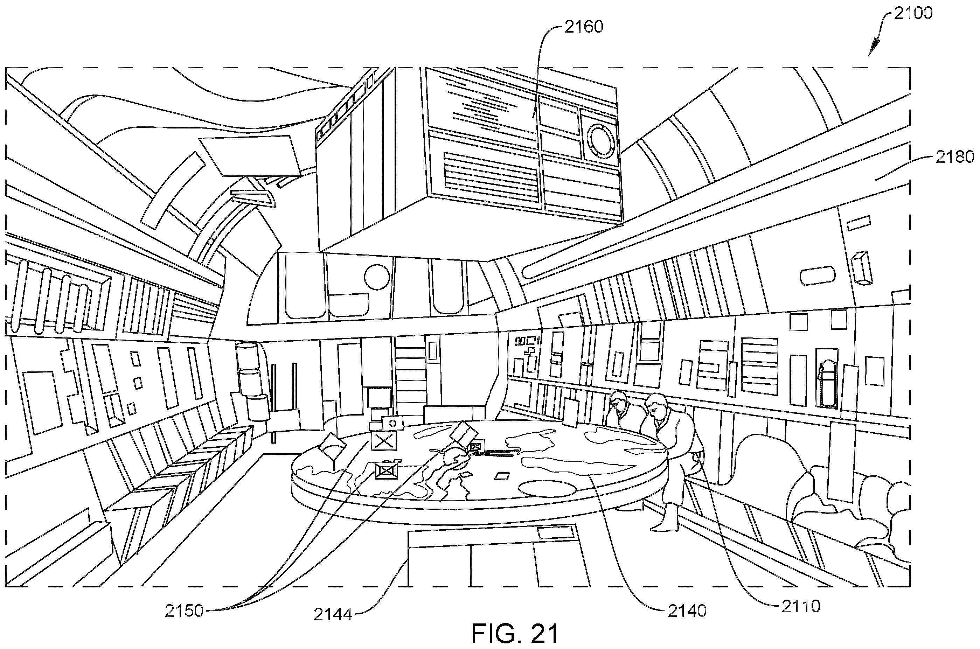

For example, FIG. 20 illustrates an example of an IC2 environment 2000 in an indoor setting according to certain embodiments of the present disclosure. In this example, the IC2 environment 2000 includes a local user 2010 using a VR headset 2015 and interacting 202o with both the digital world and the physical world. As an example, FIG. 21 illustrates an example of an IC2 environment 2100 according to certain embodiments of the present disclosure. For example, the IC2 environment 2100 is in a transportation vehicle (e.g., a subway, a bus, a plane, etc.) according to certain embodiments of the present disclosure. In this example, the IC2 environment 2100 for a mixed reality session includes one or more local participants 2110 who can view the three-dimensional image 2140 for an area of interest that anchors on a physical object with one or more digital projects 2150, one or more panels 2144, and/or the jumbotron 2160 providing additional information about the area of interest.

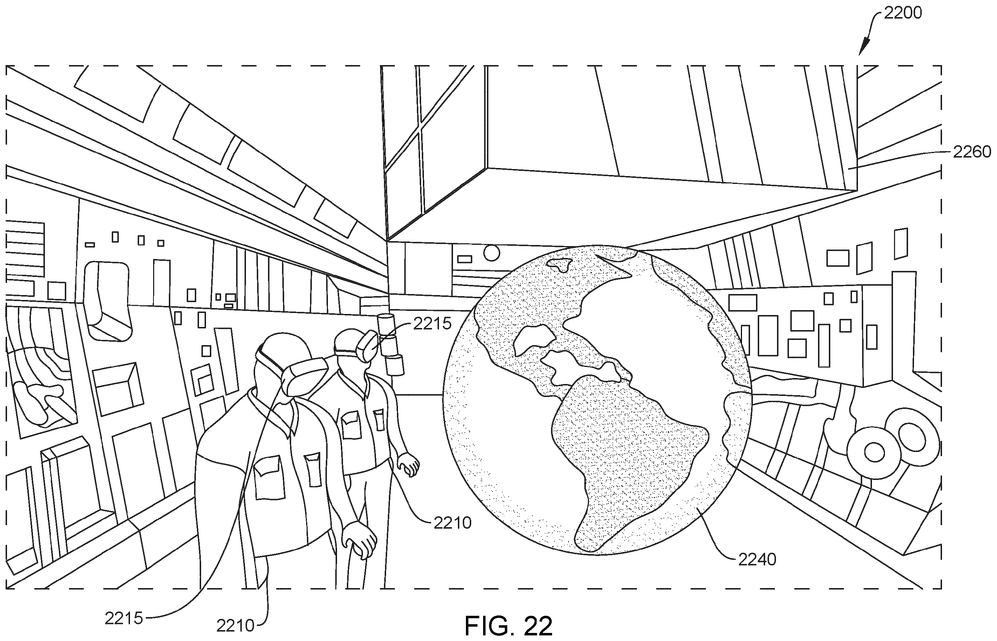

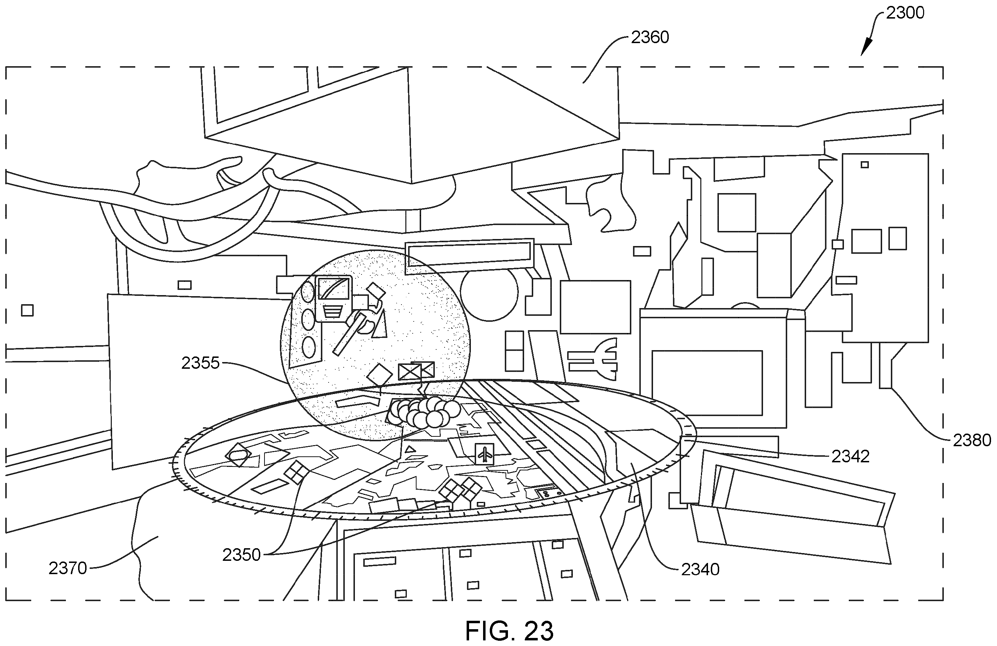

FIG. 22 illustrates an example of an IC2 environment 2200 according to certain embodiments of the present disclosure. In this example, the IC2 environment 2200 includes one or more participants 2210 using corresponding VR devices 2215. In some examples, the participants 2210 can view a three-dimensional representation 2240, for example, not anchoring on any physical object and a jumbotron 2260 above the three-dimensional representation 2240. FIG. 23 illustrates an example of an IC2 environment 2300 according to certain embodiments of the present disclosure. In this example, the IC2 environment 2300 includes a three-dimensional (3D) image 2340 anchoring on a physical object 2370 in a physical room 2380, and a jumbotron 2360 (e.g., a multi-dimensional projection object). In some examples, the 3D image is associated one or more metrics 2342 and one or more digital objects 2350 being presented. In certain examples, one or more digital objects 2350 is associated with an object property 2355 being presented.

In some examples, a mixed reality platform (e.g., a mixed reality system, etc.) is an unparalleled gateway to immersive data ontology. In certain examples, the mixed reality platform empowers end-user mixed reality applications with human-driven, machine-assisted (e.g., AI-assisted), and/or actionable insights. In some examples, mixed reality service is jointly powered by service mesh and the ontology software development kit (OSDK). In certain examples, the mixed reality service includes modular capabilities that integrate into existing enterprise architectures. In some examples, the mixed reality platform is designed to maximize future flexibility ensuring customers continuously benefit from the latest technologies, whether developed by an organization, 3rd-party vendors, or the open-source community.

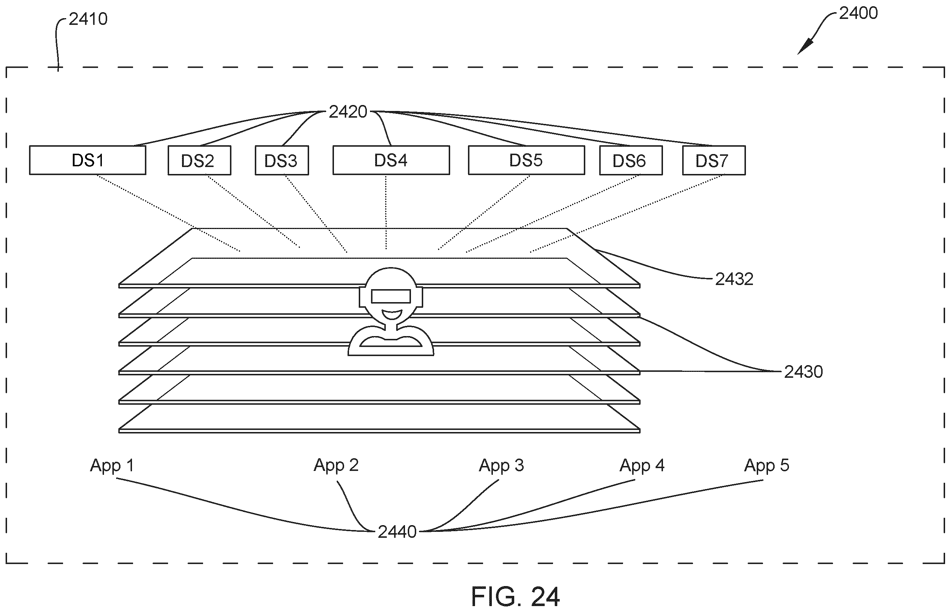

FIG. 24 is an illustrative mixed reality platform 2400 for a mixed reality system 2410 (e.g., the IC2 system 100) according to certain embodiments of the present disclosure. FIG. 24 is merely an example. One of ordinary skill in the art would recognize many variations, alternatives, and modifications. In this example, the mixed reality system 2410 includes a plurality of data sources 2420, one or more mixed reality services 2430 including a plurality of software layers, and a plurality of mixed reality clients 2440. In some embodiments, a mixed reality client 2440 is a software application. In certain embodiments, each VR device used in the mixed reality system 2410 has a mixed reality client 2440 running on it. In certain embodiments, the mixed reality service 2430 includes and/or uses ontology software development kit 2432 (OSDK), which uses an ontology for software development.

In some examples, the mixed reality platform 2400 uses ontology, where the ontology assimilates data and models into a comprehensive semantic model of an organization. In certain examples, the OSDK 2432 enables the organization's and/or 3rd party applications to explore the ontology in a multitude of paradigms, enabled through application programming interfaces (APIs).

In some examples, the mixed reality platform 2400 enables accelerated development of mixed reality services and/or mixed reality applications (e.g., mixed reality clients, mixed reality client applications, etc.). For example, with the mixed reality service 2430 and/or OSDK 2432, users can quickly start developing mixed reality applications backed by an ontology system. By enabling ergonomic access to ontology APIs, for example, the OSDK 2432 allows users to read and write back to the ontology system.

In certain examples, the mixed reality platform 2400 provides strong type safety. In some examples, the functions and types generated for the OSDK 2432 are based solely on the subset of the ontology most relevant to the user. In certain examples, types and functions are generated from the ontology, allowing users to query and explore the ontology directly.

In certain examples, the mixed reality platform is secured by design. The mixed reality service 2430 and/or OSDK 2432 extend classification and role-based authentication, scoped only to the authorized users, inclusive of all mixed reality applications and ontological data entities. In some examples, the mixed reality platform can transform mixed reality applications with only a few lines of code (e.g., four lines of code) through the power of the mixed reality platform 2400 and/or the OSDK 2432.

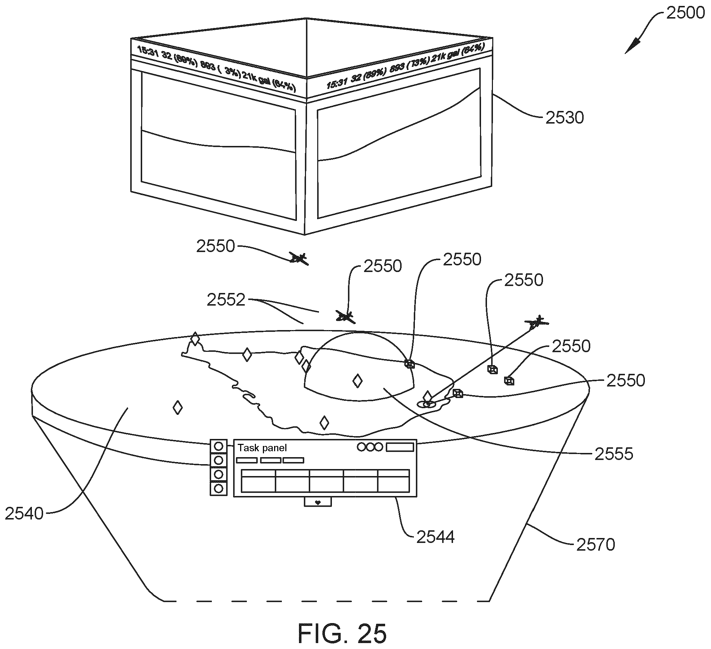

In some examples, the mixed reality immersive command and control (IC2) application (e.g., the mixed reality client 120) is ontology-powered mixed reality application and built on the mixed reality service. In certain examples, the mixed reality client applications are designed with data immersion, extensibility, and portability as principles. FIG. 25 is an example virtual commend center 2500 (e.g., an IC2 environment, a user interface) provided by a mixed reality client (e.g., an IC2 application) according to certain embodiments of the present disclosure. FIG. 25 is merely an example. One of ordinary skill in the art would recognize many variations, alternatives, and modifications. In this example, the virtual command center 2500 includes a three-dimensional image 2540 projected on a physical object 2570, representation of one or more digital objects 2550, representation of one or more object properties 2555 associated with at least one digital object 2550, representation of one or more object relationships, and/or one or more panels 2544 (e.g., object panels, target object panels, task panels, etc.). For example, an IC2 application delivers rich, immersive integration with the entire data enterprise. As an example, an IC2 application enhances command and staff duties in the joint operations center and can be deployed in expeditionary environments at the point of need. In some examples, an IC2 solution increases the mission command function by increasing situational awareness, command and control, and access to real-time terrain data.

In certain examples, the IC2 application, built with the mixed reality platform and/or OSDK delivers native integration with various software programs. In some examples, additional features are enabled by one or more software platforms and artificial intelligence platforms. In certain examples, the IC2 application (e.g., the mixed reality client application, etc.) is built in lightweight code and leverages one or more engines (e.g., game engines, three-dimensional game engines, etc.), making the application performant and portable. In some examples, the IC2 application can be compiled to run on various platforms (e.g., AppleTM, AndroidTM, and MicrosoftTM Operation System devices, including VisionProTM, Meta QuestTM, Magic LeapTM, HoloLensTM, IVAS (integrated visualization and augmentation system), etc.).

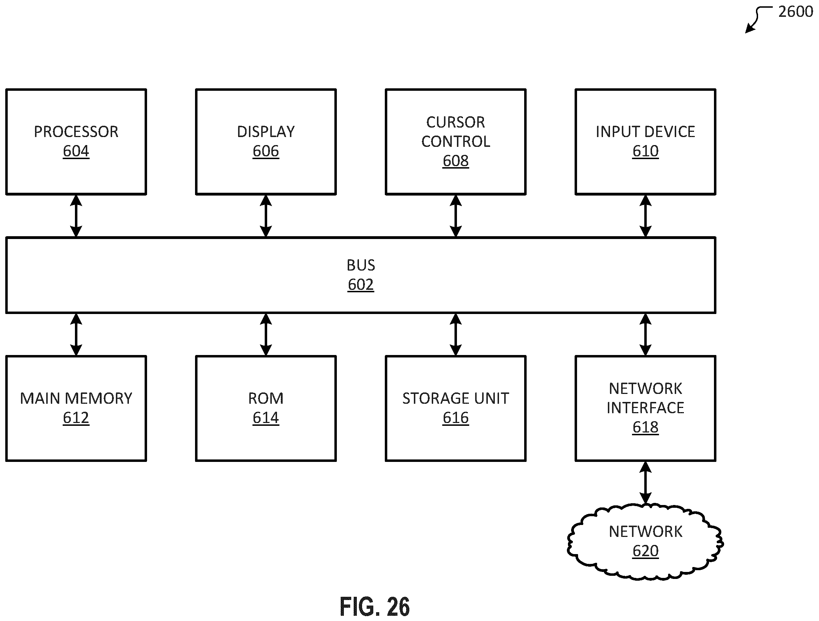

FIG. 26 is a simplified diagram showing a computing system for implementing a system 2600 for mixed reality immersive command and control in accordance with at least one example set forth in the disclosure. This diagram is merely an example, which should not unduly limit the scope of the claims. One of ordinary skill in the art would recognize many variations, alternatives, and modifications.

The computing system 2600 includes a bus 602 or other communication mechanism for communicating information, a processor 604, a display 606, a cursor control component 608, an input device 610, a main memory 612, a read only memory (ROM) 614, a storage unit 616, and a network interface 618. In some embodiments, some or all processes (e.g., steps) of the methods (e.g., the method 2700, the method 2800, etc.) in the present disclosure are performed by the computing system 2600. In some examples, the bus 602 is coupled to the processor 604, the display 606, the cursor control component 608, the input device 610, the main memory 612, the read only memory (ROM) 614, the storage unit 616, and/or the network interface 618. In certain examples, the network interface is coupled to a network 620. For example, the processor 604 includes one or more general purpose microprocessors. In some examples, the main memory 612 (e.g., random access memory (RAM), cache and/or other dynamic storage devices) is configured to store information and instructions to be executed by the processor 604. In certain examples, the main memory 612 is configured to store temporary variables or other intermediate information during execution of instructions to be executed by processor 604. For example, the instructions, when stored in the storage unit 616 accessible to processor 604, render the computing system 2600 into a special-purpose machine that is customized to perform the operations specified in the instructions. In some examples, the ROM 614 is configured to store static information and instructions for the processor 604. In certain examples, the storage unit 616 (e.g., a magnetic disk, optical disk, or flash drive) is configured to store information and instructions.

In some embodiments, the display 606 (e.g., a cathode ray tube (CRT), an LCD display, or a touch screen) is configured to display information to a user of the computing system 2600. In some examples, the input device 610 (e.g., alphanumeric and other keys) is configured to communicate information and commands to the processor 604. For example, the cursor control component 608 (e.g., a mouse, a trackball, or cursor direction keys) is configured to communicate additional information and commands (e.g., to control cursor movements on the display 606) to the processor 604.

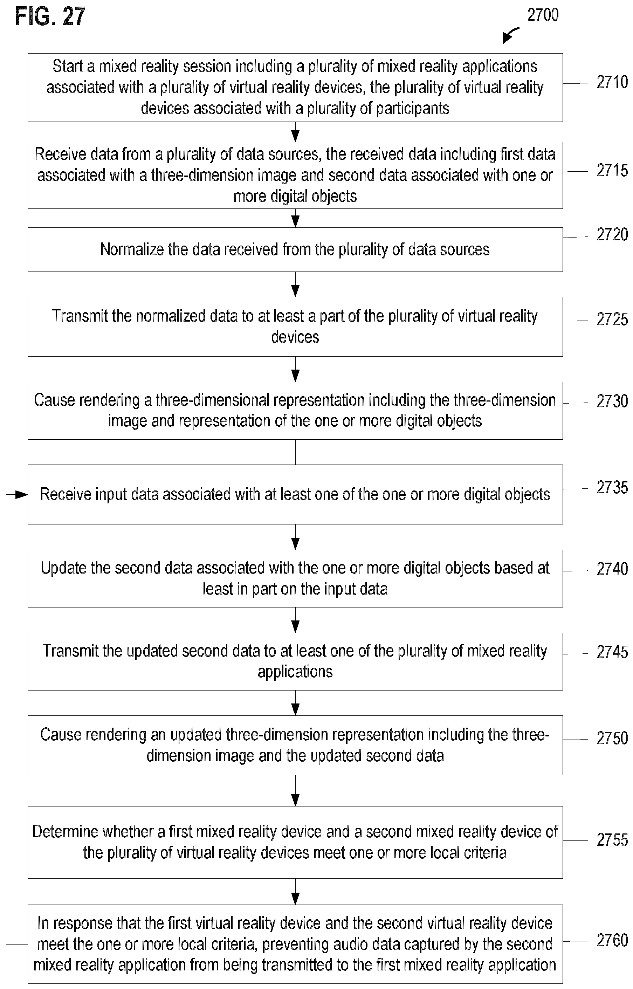

FIG. 27 is a simplified diagram showing a method 2700 for mixed reality immerse command and control (e.g., by the mixed reality service 110) according to certain embodiments of the present disclosure. This diagram is merely an example. One of ordinary skill in the art would recognize many variations, alternatives, and modifications. The method 2700 includes processes 2705, 2710, 2715, 2720, 2725, 2730, 2735, 2740, 2745, 2750, 2755, and 2760. Although the above has been shown using a selected group of processes for the method 2700, there can be many alternatives, modifications, and variations. For example, some of the processes may be expanded and/or combined. Other processes may be inserted to those noted above. Depending upon the embodiment, the sequence of processes may be changed, and one or more processes may be replaced. Further details of these processes are found throughout the present disclosure.

In some embodiments, some or all processes (e.g., steps) of the method 2700 are performed by a system (e.g., the computing system 2600). In certain examples, some or all processes (e.g., steps) of the method 2700 are performed by a computer and/or a processor directed by a code. For example, a computer includes a server computer and/or a client computer (e.g., a personal computer). In some examples, some or all processes (e.g., steps) of the method 2700 are performed according to instructions included by a non-transitory computer-readable medium (e.g., in a computer program product, such as a computer-readable flash drive). For example, a non-transitory computer-readable medium is readable by a computer including a server computer and/or a client computer (e.g., a personal computer, and/or a server rack). As an example, instructions included by a non-transitory computer-readable medium are executed by a processor including a processor of a server computer and/or a processor of a client computer (e.g., a personal computer, and/or server rack).

According to some embodiments, at process 2710, the system starts a mixed reality session for collaboration among a plurality of participants, where the plurality of participants are associated with a plurality of mixed reality applications. In certain embodiments, each participant is using a virtual reality device with a mixed reality application running on the virtual reality device.

According to certain embodiments, at process 2715, the system receives data from a plurality of data sources, where the received data includes first data associated with a three-dimensional image (e.g., a geospatial map, a stadium data, associated with 3D terrain and map data etc.) and second data and/or other data from data sources associated with one or more digital objects and their properties (e.g., a field engineering target object, a disaster recovery area, etc.) to be visualized in the 3D image (e.g., 3D map, etc.). In some embodiments, at process 2720, the system normalizes the data received from the plurality of data sources. In certain embodiments, the system normalizes the received data via geospatial data (e.g., a center of a target of interest, a center of an area of interest, etc.), for example, via image registration algorithm. In some embodiments, the system normalizes the received data via time data (e.g., synchronizing data from a plurality of data sources.

According to some embodiments, at process 2725, the system transmits the normalized data to other mixed reality application of the plurality of mixed reality applications associated with the plurality of participants of the mixed reality session. In certain embodiments, at process 2730, the system causes rendering (e.g., via one or more VR devices, one or more AR devices, etc.) a three-dimensional representation including the 3D image and/or one or more representations associated with the one or more digital objects. In some embodiments, the one or more representations associated with the one or more digital objects are presented within the 3D image.

According to certain embodiments, at process 2735, the system receives input data associated with the one or more digital objects from at least one of the plurality of mixed reality applications (e.g., the mixed reality client 120, etc.). In some embodiments, the input data is received via a panel associated with a digital object and/or a task. In certain embodiments, the panel (e.g., an object panel, a task panel) is rendered with the three-dimensional representation.

According to some embodiments, at process 2740, the system updates the second data associated with the one or more digital objects based at least in part on the input data and/or real-time object data (e.g., object data being updated in real-time). In certain embodiments, at process 2745, the system transmits the updated second data to at least one of the plurality of mixed reality applications. In some embodiments, the system transmits the updated second data to every mixed reality application of the plurality of mixed reality applications. In certain embodiments, at process 2750, the system causes rendering an updated three-dimension representation including the three-dimension image and the updated second data.

According to certain embodiments, at least a part of the mixed reality data (e.g., the mixed reality data 130) is updated real-time (e.g., video stream) and causes updates the 3D representations generated by one or more VR devices. In some embodiments, at least a part of the mixed reality data includes VR device location that can be changing overtime (e.g., participant moving) and cause updates to the 3D representations generated by one or more VR devices. In certain embodiments, at least a part of the mixed reality data is updated based on the changes. In some embodiments, a change can be a request to change one or more visual properties (e.g., shape, size, color, filling, etc.) that is received via a mixed reality client. In certain embodiments, the system changes a representation to at least one of the one or more digital objects based on the request to change.

According to some embodiments, the system receives a first object input from a first mixed reality application of the plurality of mixed reality applications, where the first object input is captured by the first mixed reality application and the first object input associated with at least one of one or more properties of the one or more digital objects. In certain embodiments, the system receives a second object input from a second mixed reality application of the plurality of mixed reality applications, where the second object input is captured by the second mixed reality application, and/or where the second object input is associated with at least one of the one or more properties of the one or more digital objects.

In some embodiments, the system merges the first object input and the second object input to generate a merged object input (e.g., a specific update to object data). For example, the first object input includes a move to a digital object and second object input includes a change of color to the digital input, and the system can merge both changes. In certain embodiments, the system causing rendering a representation of the merged object input (e.g., a representation of a digital object at a new location and/or with a new color, etc.) by at least the first virtual reality device or the second virtual reality device.

According to some embodiments, at process 2755, the system determines whether the plurality of VR devices corresponding to the plurality of participants are local for each other. In certain embodiments, the system determines whether the plurality of VR devices meet on or more local criteria. In some embodiments, the one or more local criteria include a criterion of a threshold distance (e.g., 5 meters), such that participants within the threshold distance are determined to be local. In certain embodiments, the one or more local criteria include a criterion of a geographic boundary (e.g., a room, a field, etc.), such that participants within the geographic boundary are determined to be local. In some embodiments, the one or more local criteria include a criterion on signal propagation. In some embodiments, the mixed reality client applications and/or the mixed reality service generate a same virtual command center for the local participants.

In certain embodiments, the system receives first telemetry data from the first mixed reality application of the plurality of mixed reality applications, the first telemetry data including first geospatial data associated with the first virtual reality device of the plurality of virtual reality devices. In some embodiments, the system receives second telemetry data from the second mixed reality application of the plurality of mixed reality applications, the second telemetry data including second geospatial data associated with the second virtual reality device of the plurality of virtual reality devices. In certain embodiments, the system determines whether the first virtual reality device and the second virtual reality device meet one or more local criteria based at least in part on the first telemetry data and the second telemetry data.

According to certain embodiments, at process 2760, in response that the first virtual reality device and the second virtual reality device meet the one or more local criteria, the system is configured to prevent audio data captured by the second mixed reality application corresponding to the second virtual reality device from being transmitted to the first mixed reality application corresponding to the first virtual reality device. In some embodiments, the system is configured to do not play the audio signal captured by the second mixed reality application on the first virtual reality device (e.g., not by the first mixed reality application).

In some embodiments, in response that the first virtual reality device and the second virtual reality device do not meet the one or more local criteria, the system transmits second session input (e.g., input by interacting an object panel and/or a task panel, voice input, etc.) captured by the second mixed reality application to the first mixed reality application. In certain embodiments, in response that the first virtual reality device and the second virtual reality device do not meet the one or more local criteria, the system transmits first session input (e.g., input by interacting an object panel and/or a task panel, voice input, etc.) captured by the first mixed reality application to the second mixed reality application. In certain embodiments, the system goes back to the process 2735 to receive additionally input data and/or data updates (e.g., object data updates).

According to some embodiments, in response that the first virtual reality device and the second virtual reality device do not meet the one or more local criteria, the system generates a digital figure representing the second participant in the virtual command center generated for the first participant. In certain embodiments, the system receives a request from a third participant to join the mixed reality session, where the third participant is associated with a third mixed reality application running on a third virtual reality device. In certain embodiments, the system transmits the normalized data and the updated second data to the third mixed reality application.

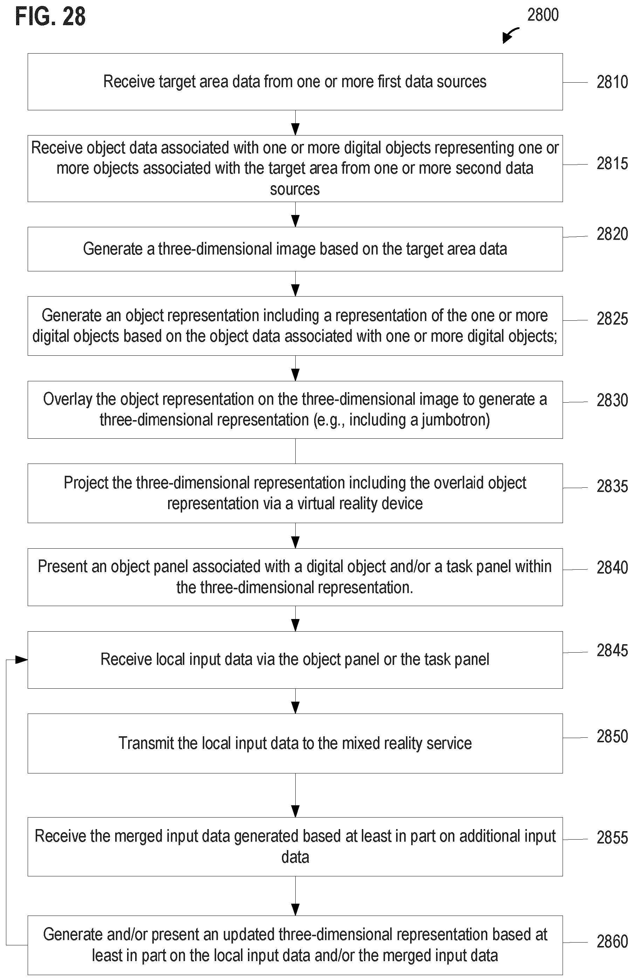

FIG. 28 is a simplified diagram showing a method 2800 for mixed reality immerse command and control (e.g., by the mixed reality client 120) according to certain embodiments of the present disclosure. This diagram is merely an example. One of ordinary skill in the art would recognize many variations, alternatives, and modifications. The method 2800 includes processes 2805, 2810, 2815, 2820, 2825, 2830, 2835, 2840, 2845, 2850, 2855, and 2860. Although the above has been shown using a selected group of processes for the method 2800, there can be many alternatives, modifications, and variations. For example, some of the processes may be expanded and/or combined. Other processes may be inserted to those noted above. Depending upon the embodiment, the sequence of processes may be changed, and one or more processes may be replaced. Further details of these processes are found throughout the present disclosure.

In some embodiments, some or all processes (e.g., steps) of the method 2800 are performed by a system (e.g., the computing system 2600). In certain examples, some or all processes (e.g., steps) of the method 2800 are performed by a computer and/or a processor directed by a code. For example, a computer includes a server computer and/or a client computer (e.g., a personal computer). In some examples, some or all processes (e.g., steps) of the method 2800 are performed according to instructions included by a non-transitory computer-readable medium (e.g., in a computer program product, such as a computer-readable flash drive). For example, a non-transitory computer-readable medium is readable by a computer including a server computer and/or a client computer (e.g., a personal computer, and/or a server rack). As an example, instructions included by a non-transitory computer-readable medium are executed by a processor including a processor of a server computer and/or a processor of a client computer (e.g., a personal computer, and/or server rack).

According to some embodiments, at process 2810, the system receives target area (e.g., area of interest (AOI), point of interest (POI), etc.) data from one or more first data sources. In certain embodiments, the target area data includes geospatial data for an area of interest (AOI). In some embodiments, the environment data includes environment data associated with the AOI including, for example, weather data, geography data, time data, and/or the like. In certain embodiments, the target area data includes target data (e.g., data associated with an area of interest, data associated with a target object, data associated with a building, etc.), effector data (e.g., data for equipment, data for fire distinguishing equipment, etc.), and/or target-effector associated pairing data. For example, the system is to assist a deployment of a field engineering at the target area. As an example, the first data source is a geospatial data repository. In some embodiments, the target area data is normalized, for example, based on geospatial information (e.g., a point in the target area, a center point in the target area, etc.), time information, and/or the like.

According to certain embodiments, at process 2815, the system receives object data associated with one or more digital objects representing one or more objects (e.g., a building, a vehicle, a plane, a person, etc.) associated with the target area (e.g., in the target area, moving in or out of the target area, etc.). In some embodiments, the system uses a digital object (e.g., an object in software) to represent a physical object. In certain embodiments, the system uses a digital object (e.g., an object in software) to represent a physical object, for example, using ontology for a specific industry, an ontology for a specific organization, and/or an ontology for a specific use case. In some embodiments, the object data is normalized, for example, based on geospatial information (e.g., a point in the target area, a center point in the target area, etc.), time information, and/or the like.

According to some embodiments, at process 2820, the system generates a three-dimensional image (e.g., a three-dimensional geospatial map, a three-dimensional machine image, etc.) based on the target area data from one or more first data sources. In certain embodiments, at process 2825, the system generates an object representation including a representation of the one or more digital objects based on the object data associated with one or more digital objects. In some embodiments, at process 2830, the system overlays the object representation on the three-dimensional image to generate a three-dimensional representation. In certain embodiments, at process 2835, the system projects the three-dimensional representation including the overlaid object representation via a virtual reality device. In some embodiments, the three-dimensional representation is projected anchoring on a physical object.

According to certain embodiments, at process 2840, the system presents an object panel associated with a digital object and/or a task panel within the three-dimensional representation. In some embodiments, the system presents an object panel associated with a digital object and/or a task panel within the three-dimensional representation in response to a user input (e.g., by selecting from a menu, etc.). In some embodiments, the object panel presents one or more properties, instructions, presentation properties, and/or the like. In certain embodiments, the task panel presents one or more options for a task including corresponding task parameters (e.g., task steps, etc.) and performance parameters (e.g., time for completion, efficacy parameters, etc.). In some embodiments, the object panel and/or the task panel are presented in the foreground in the three-dimensional representation, for example, not blocked by object representation. In certain embodiments, the object panel and/or the task panel are presented in the foreground in the three-dimensional representation, for example, blocking a part of the object representation and/or the three-dimensional image.

According to some embodiments, at process 2845, the system receives local input via the object panel or the task panel. In certain embodiments, the system receives a local input associated with the one or more digital objects from a local participant. In some embodiments, at process 2850, the system transmits the local input data to the mixed reality service. In certain embodiments, the mixed reality service receives additional input data from one or more data feeds, input data from one or more sensor data feeds, input data from a different virtual command center generated by a remote participant, and/or other input data. In some embodiments, the mixed reality service generates merged input data based at least in part on the local input data and/or the additional input data.

According to certain embodiments, at process 2855, the system receives merged input data generated based at least in part on additional input data, for example, input data from a remote participant. In some embodiments, at process 2860, the system generates and/or presents an updated three-dimensional representation based at least in part on the local input data and/or the merged input data. In certain embodiments, the system projects the second three-dimensional representation via the virtual reality device. In some embodiments, the system repeat the processes 2845 to 2860 to receive inputs and/or updates and/or update the three-dimensional representation, for example, rendered by the virtual reality device.

According to certain embodiments, the system presents one or more session panels associated with a mixed reality session, where the session panel includes at least one selected from a group consisting of an object panel including text information or graphic information associated with the one or more properties of the at least one of the one or more digital objects, a task panel including text information associated with a task, and an image panel associated with one or more image properties (e.g., map properties, zooming properties, etc.) associated with the three-dimensional image (e.g., a 3D map). In some embodiments, the system collects local input data based on a participant interacting with the virtual command center and/or the session panel via the virtual reality device.

According to some embodiments, a session panel includes text information or graphic information associated with one or more digital objects and/or one or more tasks. In certain embodiments, the session panel is presented as foreground of the three-dimensional representation.

According to certain embodiments, the system manages a mixed reality session includes a first participant and/or a group of first participants who are local. In some embodiments, the system receives telemetry data from a second virtual reality device associated with a second participant, where the first participant and the second participant collaborate in the mixed reality session. In certain embodiments, the first participant and the second participant are collaborating via voice. In certain embodiments, the system determines whether the first virtual reality device and the second virtual reality device meet one or more local criteria based at least in part on the telemetry data. In some embodiments, the one or more local criteria include at least one selected from a group consisting of a criterion on a distance, a criterion on a geographic boundary, and a criterion on signal propagation.

According to some embodiments, in response that the first virtual reality device and the second virtual reality device meet the one or more local criteria, the system prevents audio data captured by the second virtual reality device from being transmitted to and/or played at the first virtual reality device. In certain embodiments, in response that the first virtual reality device and the second virtual reality device do not meet the one or more local criteria, the system generates a digital figure representing the second participant. In some embodiments, the three-dimensional representation includes the digital figure representing the second participant.

According to certain embodiments, the system renders a jumbotron having a plurality of sides, at least one of the plurality of sides presenting at least a part of the environment data from at least one of the one or more first data sources. In some embodiments, at least one of the plurality of sides of the jumbotron presents at least a part of the object data from at least one of the one or more second data sources. In certain embodiments, the at least a part of the object data includes a video feed associated with sensor data from a sensor disposed on a plane (e.g., a drone, an UAS, an airplane, etc.).

According to certain embodiments, a method for mixed reality immersive command and control, the method comprising: generating a three-dimensional image based on target area data from one or more first data sources; receiving object data associated with one or more digital objects from one or more second data sources; generating an object representation including a representation of at least one of the one or more digital objects based on the object data associated with one or more digital objects; overlaying the object representation on the three-dimensional image to generate a three-dimensional representation; and projecting the three-dimensional representation including the overlaid object representation via a virtual reality device; wherein the method is performed by one or more processors. For example, the method is implemented according to at least FIGS. 1-28.

In some embodiments, the three-dimensional representation is a first three-dimensional representation, wherein the method further comprises: receiving local input data associated with the one or more digital objects from a local participant; transmitting the local input data to a mixed reality service; receiving merged input data generated based on the local input and a remote input associated with the one or more digital objects from a remote participant; generating a second three-dimensional representation based on the first three-dimensional representation and the merged input data; and projecting the second three-dimensional representation via the virtual reality device. In certain embodiments, the method further comprises: receiving a user input associated with three-dimensional representation; generating an object panel including a representation of one or more properties of the at least one of the one or more digital objects based on the user input; and presenting the object panel via the virtual reality device. In certain embodiments, the method further comprises: collecting local input data based on a participant interacting with the object panel via the virtual reality device.

In some embodiments, the method further comprises: presenting one or more session panels associated with a mixed reality session; wherein the one or more session panels includes at least one selected from a group consisting of an object panel including text information or graphic information associated with the one or more properties of the at least one of the one or more digital objects, a task panel including text information associated with a task, and an image panel associated with one or more image properties associated with the three-dimensional image. In certain embodiments, the one or more session panels are presented as foreground of the three-dimensional representation. In some embodiments, the virtual reality device is a first virtual reality device, wherein a first participant is associated with the first virtual reality device, wherein the method further comprises: receiving telemetry data from a second virtual reality device associated with a second participant, the first participant and the second participant collaborating in a mixed reality session, wherein the first participant and the second participant are collaborating via voice; determining whether the first virtual reality device and the second virtual reality device meet one or more local criteria based at least in part on the telemetry data; and in response that the first virtual reality device and the second virtual reality device meet the one or more local criteria, preventing audio data captured by the second virtual reality device from being transmitted to the first virtual reality device. In certain embodiments, the one or more local criteria include at least one selected from a group consisting of a criterion on a distance, a criterion on a geographic boundary, and a criterion on signal propagation.

In some embodiments, the virtual reality device is a first virtual reality device, wherein a first participant is associated with the first virtual reality device, wherein the method further comprises: receiving telemetry data from a second virtual reality device associated with a second participant, the first participant and the second participant collaborating in a mixed reality session; determining whether the first virtual reality device and the second virtual reality device meet one or more local criteria based at least in part on the telemetry data; and in response that the first virtual reality device and the second virtual reality device do not meet the one or more local criteria, generating a digital figure representing the second participant; wherein the generating three-dimensional representation includes incorporating the digital figure representing the second participant in the three-dimensional representation. In certain embodiments, the projecting the three-dimensional representation including the overlaid object representation includes anchoring the projected three-dimensional representation including the overlaid object representation to a physical object. In some embodiments, the method further comprises: rendering a jumbotron having a plurality of sides, at least one of the plurality of sides presenting at least a part of the target area data from at least one of the one or more first data sources. In certain embodiments, at least one of the plurality of sides of the jumbotron presents at least a part of the object data from at least one of the one or more second data sources, wherein the at least a part of the object data includes a video feed associated with sensor data from a sensor disposed on a plane.

According to certain embodiments, a method for mixed reality immersive command and control, the method comprising: starting a mixed reality session for collaboration among a plurality of participants, the plurality of participants being associated with a plurality of mixed reality applications; receiving data from a plurality of data sources, the received data including first data associated with a three-dimensional image and second data associated with one or more digital objects; normalizing the data received from the plurality of data sources; transmitting the normalized data to the plurality of mixed reality applications associated with the plurality of participants of the mixed reality session; receiving input data associated with the one or more digital objects from a first mixed reality application of the plurality of mixed reality applications; updating the second data associated with the one or more digital objects based at least in part on the input data; and transmitting the updated second data to at least a second mixed reality application of the plurality of mixed reality applications; causing rendering a three-dimensional representation representative of the three-dimensional image and the updated second data by the second mixed reality application; wherein the method is performed by one or more processors. For example, the method is implemented according to at least FIGS. 1-28.

In some embodiments, the plurality of mixed reality applications run on a plurality of virtual reality devices. In certain embodiments, the method further comprises: receiving first telemetry data from the first mixed reality application of the plurality of mixed reality applications, the first telemetry data including first geospatial data associated with a first virtual reality device of the plurality of virtual reality devices; receiving second telemetry data from the second mixed reality application of the plurality of mixed reality applications, the second telemetry data including second geospatial data associated with a second virtual reality device of the plurality of virtual reality devices; and determining whether the first virtual reality device and the second virtual reality device meet one or more local criteria based at least in part on the first telemetry data.

In some embodiments, the first participant and the second participant are collaborating via voice, wherein the method further comprises: in response that the first virtual reality device and the second virtual reality device meet the one or more local criteria, preventing audio data captured by the second mixed reality application from being transmitted to the first mixed reality application. In certain embodiments, the method further comprises: receiving an object input from the second mixed reality application of the plurality of mixed reality applications, the second object input being captured by the second mixed reality application, the second object input associated with at least one of one or more properties of the one or more digital objects; and in response that the first virtual reality device and the second virtual reality device do not meet the one or more local criteria, transmitting the object input to the first mixed reality application.

In some embodiments, the method further comprises: receiving a first object input from a first mixed reality application of the plurality of mixed reality applications, the first object input captured by the first mixed reality application, the first object input associated with at least one of one or more properties of the one or more digital objects; receiving a second object input from a second mixed reality application of the plurality of mixed reality applications, the second object input captured by the second mixed reality application, the second object input associated with at least one of the one or more properties of the one or more digital objects; and merging the first object input and the second object input to generate a merged object input; and causing rendering a representation of the merged object input by at least the first virtual reality device or the second virtual reality device. In certain embodiments, the method further comprises: receiving a request from a third participant to join the mixed reality session, the third participant is associated with a third mixed reality application running on a third virtual reality device; and transmitting the normalized data and the updated second data to the third mixed reality application.

According to some embodiments, a system for mixed reality immersive command and control, the system comprising: one or more memories comprising instructions stored thereon; and one or more processors configured to execute the instructions and perform a set of operations comprising: generating a three-dimensional image based on target area data from one or more first data sources; receiving object data associated with one or more digital objects from one or more second data sources; generating an object representation including a representation of at least one of the one or more digital objects based on the object data associated with one or more digital objects; overlaying the object representation on the three-dimensional image to generate a three-dimensional representation; and projecting the three-dimensional representation including the overlaid object representation. For example, the system is implemented according to FIGS. 1-28.

In some embodiments, the three-dimensional representation is a first three-dimensional representation, wherein the set of operations further comprise: receiving local input data associated with the one or more digital objects from a local participant; transmitting the local input data to a mixed reality service; receiving merged input data generated based on the local input and a remote input associated with the one or more digital objects from a remote participant; generating a second three-dimensional representation based on the first three-dimensional representation and the merged input data; and projecting the second three-dimensional representation via the virtual reality device. In certain embodiments, the set of operations further comprise: receiving a user input associated with three-dimensional representation; generating an object panel including a representation of one or more properties of the at least one of the one or more digital objects based on the user input; and presenting the object panel via the virtual reality device. In certain embodiments, the set of operations further comprise: collecting local input data based on a participant interacting with the object panel via the virtual reality device.

In some embodiments, the set of operations further comprise: presenting one or more session panels associated with a mixed reality session; wherein the one or more session panels includes at least one selected from a group consisting of an object panel including text information or graphic information associated with the one or more properties of the at least one of the one or more digital objects, a task panel including text information associated with a task, and an image panel associated with one or more image properties associated with the three-dimensional image. In certain embodiments, the one or more session panels are presented as foreground of the three-dimensional representation. In some embodiments, the virtual reality device is a first virtual reality device, wherein a first participant is associated with the first virtual reality device, wherein the set of operations further comprise: receiving telemetry data from a second virtual reality device associated with a second participant, the first participant and the second participant collaborating in a mixed reality session, wherein the first participant and the second participant are collaborating via voice; determining whether the first virtual reality device and the second virtual reality device meet one or more local criteria based at least in part on the telemetry data; and in response that the first virtual reality device and the second virtual reality device meet the one or more local criteria, preventing audio data captured by the second virtual reality device from being transmitted to the first virtual reality device. In certain embodiments, the one or more local criteria include at least one selected from a group consisting of a criterion on a distance, a criterion on a geographic boundary, and a criterion on signal propagation.

In some embodiments, the virtual reality device is a first virtual reality device, wherein a first participant is associated with the first virtual reality device, wherein the set of operations further comprise: receiving telemetry data from a second virtual reality device associated with a second participant, the first participant and the second participant collaborating in a mixed reality session; determining whether the first virtual reality device and the second virtual reality device meet one or more local criteria based at least in part on the telemetry data; and in response that the first virtual reality device and the second virtual reality device do not meet the one or more local criteria, generating a digital figure representing the second participant; wherein the generating three-dimensional representation includes incorporating the digital figure representing the second participant in the three-dimensional representation. In certain embodiments, the projecting the three-dimensional representation including the overlaid object representation includes anchoring the projected three-dimensional image with the overlaid object representation to a physical object. In some embodiments, the set of operations further comprise: rendering a jumbotron having a plurality of sides, at least one of the plurality of sides presenting at least a part of the target area data from at least one of the one or more first data sources. In certain embodiments, at least one of the plurality of sides of the jumbotron presents at least a part of the object data from at least one of the one or more second data sources, wherein the at least a part of the object data includes a video feed associated with sensor data from a sensor disposed on a plane.

According to certain embodiments, a system for mixed reality immersive command and control, the system comprising: one or more memories comprising instructions stored thereon; and one or more processors configured to execute the instructions and perform a set of operations comprising: starting a mixed reality session for collaboration among a plurality of participants, the plurality of participants being associated with a plurality of mixed reality applications; receiving data from a plurality of data sources, the received data including first data associated with a three-dimensional image and second data associated with one or more digital objects; normalizing the data received from the plurality of data sources; transmitting the normalized data to the plurality of mixed reality applications associated with the plurality of participants of the mixed reality session; receiving input data associated with the one or more digital objects from a first mixed reality application of the plurality of mixed reality applications; updating the second data associated with the one or more digital objects based at least in part on the input data; and transmitting the updated second data to at least a second mixed reality application of the plurality of mixed reality applications; causing rendering a three-dimensional representation representative of the three-dimensional image and the updated second data by the second mixed reality application. For example, the system is implemented according to FIGS. 1-28.

In some embodiments, the plurality of mixed reality applications run on a plurality of virtual reality devices. In certain embodiments, the set of operations further comprise: receiving first telemetry data from the first mixed reality application of the plurality of mixed reality applications, the first telemetry data including first geospatial data associated with a first virtual reality device of the plurality of virtual reality devices; receiving second telemetry data from the second mixed reality application of the plurality of mixed reality applications, the second telemetry data including second geospatial data associated with a second virtual reality device of the plurality of virtual reality devices; and determining whether the first virtual reality device and the second virtual reality device meet one or more local criteria based at least in part on the first telemetry data.

In some embodiments, the first participant and the second participant are collaborating via voice, wherein the set of operations further comprise: in response that the first virtual reality device and the second virtual reality device meet the one or more local criteria, preventing audio data captured by the second mixed reality application from being transmitted to the first mixed reality application. In certain embodiments, the set of operations further comprise: receiving an object input from the second mixed reality application of the plurality of mixed reality applications, the second object input being captured by the second mixed reality application, the second object input associated with at least one of one or more properties of the one or more digital objects; and in response that the first virtual reality device and the second virtual reality device do not meet the one or more local criteria, transmitting the object input to the first mixed reality application.

In some embodiments, the set of operations further comprise: receiving a first object input from a first mixed reality application of the plurality of mixed reality applications, the first object input captured by the first mixed reality application, the first object input associated with at least one of one or more properties of the one or more digital objects; receiving a second object input from a second mixed reality application of the plurality of mixed reality applications, the second object input captured by the second mixed reality application, the second object input associated with at least one of the one or more properties of the one or more digital objects; and merging the first object input and the second object input to generate a merged object input; and causing rendering a representation of the merged object input by at least the first virtual reality device or the second virtual reality device. In certain embodiments, the set of operations further comprise: receiving a request from a third participant to join the mixed reality session, the third participant is associated with a third mixed reality application running on a third virtual reality device; and transmitting the normalized data and the updated second data to the third mixed reality application.

For example, some or all components of various embodiments of the present disclosure each are, individually and/or in combination with at least another component, implemented using one or more software components, one or more hardware components, and/or one or more combinations of software and hardware components. In another example, some or all components of various embodiments of the present disclosure each are, individually and/or in combination with at least another component, implemented in one or more circuits, such as one or more analog circuits and/or one or more digital circuits. In yet another example, while the embodiments described above refer to particular features, the scope of the present disclosure also includes embodiments having different combinations of features and embodiments that do not include all of the described features. In yet another example, various embodiments and/or examples of the present disclosure can be combined.

Additionally, the methods and systems described herein may be implemented on many different types of processing devices by program code comprising program instructions that are executable by the device processing subsystem. The software program instructions may include source code, object code, machine code, or any other stored data that is operable to cause a processing system (e.g., one or more components of the processing system) to perform the methods and operations described herein. Other implementations may also be used, however, such as firmware or even appropriately designed hardware configured to perform the methods and systems described herein.

The systems' and methods' data (e.g., associations, mappings, data input, data output, intermediate data results, final data results, etc.) may be stored and implemented in one or more different types of computer-implemented data stores, such as different types of storage devices and programming constructs (e.g., RAM, ROM, EEPROM, Flash memory, flat files, databases, programming data structures, programming variables, IF-THEN (or similar type) statement constructs, application programming interface, etc.). It is noted that data structures describe formats for use in organizing and storing data in databases, programs, memory, or other computer-readable media for use by a computer program.

The systems and methods may be provided on many different types of computer-readable media including computer storage mechanisms (e.g., CD-ROM, diskette, RAM, flash memory, computer's hard drive, DVD, etc.) that contain instructions (e.g., software) for use in execution by a processor to perform the methods' operations and implement the systems described herein. The computer components, software modules, functions, data stores and data structures described herein may be connected directly or indirectly to each other in order to allow the flow of data needed for their operations. It is also noted that a module or processor includes a unit of code that performs a software operation and can be implemented, for example, as a subroutine unit of code, or as a software function unit of code, or as an object (as in an object-oriented paradigm), or as an applet, or in a computer script language, or as another type of computer code. The software components and/or functionality may be located on a single computer or distributed across multiple computers depending upon the situation at hand.

The computing system can include client devices and servers. A client device and server are generally remote from each other and typically interact through a communication network. The relationship of client device and server arises by virtue of computer programs running on the respective computers and having a client device-server relationship to each other.

This specification contains many specifics for particular embodiments. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations, one or more features from a combination can in some cases be removed from the combination, and a combination may, for example, be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Although specific embodiments of the present disclosure have been described, it will be understood by those of skilled in the art that there are other embodiments that are equivalent to the described embodiments. Accordingly, it is to be understood that the invention is not to be limited by the specific illustrated embodiments. Various modifications and alterations of the disclosed embodiments will be apparent to those skilled in the art. The embodiments described herein are illustrative examples. The features of one disclosed example can also be applied to all other disclosed examples unless otherwise indicated. It should also be understood that all U.S. patents, patent application publications, and other patent and non-patent documents referred to herein are incorporated by reference, to the extent they do not contradict the foregoing disclosure.

## Claims

1. A method for mixed reality immersive command and control, the method comprising:
generating a three-dimensional image based on target area data from one or more first data sources;
receiving object data associated with one or more digital objects from one or more second data sources;
generating an object representation including a representation of at least one of the one or more digital objects based on the object data associated with one or more digital objects;
overlaying the object representation on the three-dimensional image to generate a three-dimensional representation; and
projecting the three-dimensional representation including the overlaid object representation via a virtual reality device;
wherein the method is performed by one or more processors.

2. The method of claim 1, wherein the three-dimensional representation is a first three-dimensional representation, wherein the method further comprises:
receiving local input data associated with the one or more digital objects from a local participant;
transmitting the local input data to a mixed reality service;
receiving merged input data generated based on the local input and a remote input associated with the one or more digital objects from a remote participant;
generating a second three-dimensional representation based on the first three-dimensional representation and the merged input data; and
projecting the second three-dimensional representation via the virtual reality device.

3. The method of claim 1 or claim 2, further comprising:
receiving a user input associated with the three-dimensional representation;
generating an object panel including a representation of one or more properties of the at least one of the one or more digital objects based on the user input; and
presenting the object panel via the virtual reality device,
optionally further comprising:
collecting local input data based on a participant interacting with the object panel via the virtual reality device.

4. The method of any preceding claim, further comprising:
presenting one or more session panels associated with a mixed reality session;
wherein the one or more session panels includes at least one selected from a group consisting of an object panel including text information or graphic information associated with one or more properties of the at least one of the one or more digital objects, a task panel including text information associated with a task, and an image panel associated with one or more image properties associated with the three-dimensional image.

5. The method of claim 4, wherein the one or more session panels are presented as foreground of the three-dimensional representation.

6. The method of any preceding claim, wherein the virtual reality device is a first virtual reality device, wherein a first participant is associated with the first virtual reality device, wherein the method further comprises:
receiving telemetry data from a second virtual reality device associated with a second participant, the first participant and the second participant collaborating in a mixed reality session, wherein the first participant and the second participant are collaborating via voice;
determining whether the first virtual reality device and the second virtual reality device meet one or more local criteria based at least in part on the telemetry data; and
in response that the first virtual reality device and the second virtual reality device meet the one or more local criteria, preventing audio data captured by the second virtual reality device from being transmitted to the first virtual reality device,
optionally wherein the one or more local criteria include at least one selected from a group consisting of a criterion on a distance, a criterion on a geographic boundary, and a criterion on signal propagation.

7. The method of any preceding claim, wherein the virtual reality device is a first virtual reality device, wherein a first participant is associated with the first virtual reality device, wherein the method further comprises:
receiving telemetry data from a second virtual reality device associated with a second participant, the first participant and the second participant collaborating in a mixed reality session;
determining whether the first virtual reality device and the second virtual reality device meet one or more local criteria based at least in part on the telemetry data; and
in response that the first virtual reality device and the second virtual reality device do not meet the one or more local criteria, generating a digital figure representing the second participant;
wherein the generating three-dimensional representation includes incorporating the digital figure representing the second participant in the three-dimensional representation.

8. The method of any preceding claim, wherein the projecting the three-dimensional representation including the overlaid object representation includes anchoring the projected three-dimensional representation including the overlaid object representation to a physical object.

9. The method of any preceding claim, further comprising:
rendering a jumbotron having a plurality of sides, at least one of the plurality of sides presenting at least a part of the target area data from at least one of the one or more first data sources, optionally wherein at least one of the plurality of sides of the jumbotron presents at least a part of the object data from at least one of the one or more second data sources, wherein the at least a part of the object data includes a video feed associated with sensor data from a sensor disposed on a plane.

10. A method for mixed reality immersive command and control, the method comprising:
starting a mixed reality session for collaboration among a plurality of participants, the plurality of participants being associated with a plurality of mixed reality applications;
receiving data from a plurality of data sources, the received data including first data associated with a three-dimensional image and second data associated with one or more digital objects;
normalizing the data received from the plurality of data sources;
transmitting the normalized data to the plurality of mixed reality applications associated with the plurality of participants of the mixed reality session;
receiving input data associated with the one or more digital objects from a first mixed reality application of the plurality of mixed reality applications;
updating the second data associated with the one or more digital objects based at least in part on the input data; and
transmitting the updated second data to at least a second mixed reality application of the plurality of mixed reality applications;
causing rendering a three-dimensional representation representative of the three-dimensional image and the updated second data by the second mixed reality application;
wherein the method is performed by one or more processors.

11. The method of claim 10, wherein the plurality of mixed reality applications run on a plurality of virtual reality devices.

12. The method of claim 11, further comprising:
receiving first telemetry data from the first mixed reality application of the plurality of mixed reality applications, the first telemetry data including first geospatial data associated with a first virtual reality device of the plurality of virtual reality devices;
receiving second telemetry data from the second mixed reality application of the plurality of mixed reality applications, the second telemetry data including second geospatial data associated with a second virtual reality device of the plurality of virtual reality devices; and
determining whether the first virtual reality device and the second virtual reality device meet one or more local criteria based at least in part on the first telemetry data.

13. The method of claim 12, wherein the plurality of participants collaborate via voice, further comprising:
in response that the first virtual reality device and the second virtual reality device meet the one or more local criteria, preventing audio data captured by the second mixed reality application from being transmitted to the first mixed reality application.

14. The method of claim 12 or claim 13, further comprising:
receiving an object input from the second mixed reality application of the plurality of mixed reality applications, the second object input being captured by the second mixed reality application, the second object input associated with at least one of one or more properties of the one or more digital objects; and
in response that the first virtual reality device and the second virtual reality device do not meet the one or more local criteria, transmitting the object input to the first mixed reality application.

15. A system for mixed reality immersive command and control, the system comprising:
one or more processors; and
one or more memories storing instructions that, when executed by the one or more processors, causes the system to perform a method in accordance with any preceding claim.
